(19) Europäisches Patentamt

European Patent Office

Office européen des brevets

(11) **EP 4 404 289 A1**

(12) **EUROPEAN PATENT APPLICATION**

(43) Date of publication:
**24.07.2024 Bulletin 2024/30**

(21) Application number: **23188079.0**

(22) Date of filing: **27.07.2023**

(51) International Patent Classification (IPC):
*H01M 4/04* (2006.01)   *C01B 32/05* (2017.01)
*C01B 32/20* (2017.01)   *H01M 4/133* (2010.01)
*H01M 4/134* (2010.01)   *H01M 4/1393* (2010.01)
*H01M 4/1395* (2010.01)   *H01M 4/36* (2006.01)
*H01M 4/38* (2006.01)   *H01M 4/587* (2010.01)
*H01M 4/62* (2006.01)   *H01M 10/052* (2010.01)
*H01M 4/02* (2006.01)

(52) Cooperative Patent Classification (CPC):
**H01M 4/04; C01B 32/05; C01B 32/956;
C01B 33/02; H01M 4/0471; H01M 4/133;
H01M 4/134; H01M 4/1393; H01M 4/1395;
H01M 4/36; H01M 4/386; H01M 4/587;
H01M 4/625; H01M 10/052;** C01P 2002/72;  (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **17.01.2023   KR 20230006702**

(71) Applicant: **Magnatech Co., Ltd
Donghwa-myeon, Jangseong-gun
Jeollanam-do, 57241 (KR)**

(72) Inventors:
• **KIM, Dong-Whan
30124 DAJEONGBUK-RO SEJONG-SI (KR)**
• **CHO, Young-Hee
30123 DAJEONGJUNGANG-RO SEJONG-si (KR)**
• **PARK, Sunhoo
62250 GWANGJU-SI (KR)**

(74) Representative: **ZBM Patents - Zea, Barlocci &
Markvardsen
Rambla Catalunya, 123
08008 Barcelona (ES)**

(54) **COFFEE GROUND COMPOSITION AND SECONDARY BATTERY ANODE MATERIAL COMPRISING SAME**

(57)   The present disclosure is to provide a coffee ground composition which can suppress the phenomenon of silicon crushing and peeling due to volume expansion during charging and discharging, and has improved charging and discharging characteristics such as initial efficiency, capacity, and lifespan characteristics, and a secondary battery anode material comprising the same.

The present disclosure can contribute to the protection of the natural environment through the preparation of a lithium secondary battery high-capacity silicon anode active material prepared using coffee grounds, an environmental pollutant, and can lower a lithium secondary battery anode material preparation cost with the high-capacity silicon anode active material using the coffee grounds.

In addition, the present disclosure not only can suppress the phenomenon of silicon crushing and peeling due to volume expansion during charging and discharging, but also can improve charging and discharging characteristics such as initial efficiency, capacity, and lifespan characteristics.

EP 4 404 289 A1

(52) Cooperative Patent Classification (CPC): (Cont.)
C01P 2002/82; C01P 2002/85; C01P 2004/61;
C01P 2006/11; C01P 2006/40; H01M 2004/021

**Description**

This application claims the priority of Korean Patent Application No. KR 10-2023-0006702 filed on 17 January 2023, in the Korean Intellectual Property Office, the disclosure of which is incorporated herein by reference.

**Technical Field**

The present disclosure relates to a coffee ground composition and a secondary battery anode material comprising the same.

**Background Art**

Global interest in new energy sources is increasing as the demand for ultra-large power storage systems soars along with various electronic devices that have recently been miniaturized and lightweighted. Among them, research and development are focused on the field of lithium secondary batteries, which are eco-friendly, have high energy densities, and can be rapidly charged/discharged.

In particular, carbon-based, metal-based, and oxide-based materials used as anode active materials for lithium secondary batteries not only have diverse types, but also play a key role in improving high-output, high-density energy power so that many studies and commercialization are being conducted.

Silicon among them is in the limelight as one of the new anode active materials by having an electrochemical reduction potential of 0.4 V and a high capacity of 4,200 mAh/g.

However, although silicon has a very high capacity, volume expansion and contraction of 300% or more occurs in silicon by charging and discharging processes unlike carbon-based or metal-based anode active materials.

Such a large volume change in silicon forms an unstable solid-electrolyte interphase (SEI) and causes deintercalation from the current collector to exhibit low lifespan characteristics and capacity reduction.

In addition, since the lithium ion diffusion rate of a silicon material is also slow due to a low electrical conductivity of silicon, this adversely affects the rate capability characteristics of silicon.

Therefore, a method capable of obtaining high lifespan characteristics and high capacity characteristics by mitigating these rapid volume changes, researches of improving rate performance through short ion transfer distances by manufacturing structures with high surface area are ongoing.

Nano-sized carbon-based materials that are widely used as composites with such silicon may improve the rate capability characteristics of silicon due to high electrical conductivity, large surface area, and thermal and chemical stability.

In addition, since the effect of increasing capacity and improving lifespan characteristics can also be obtained by providing a structure that can mitigate the volume change of silicon, there is a tendency of conducting a lot of research on it.

In this regard, Korean Patent No. 10-0903503, publication date of May 8, 2009 (hereinafter referred to as Conventional Art 1) has conventionally been disclosed.

Such Conventional Art 1 was a technology for providing an anode active material having remarkably improved lifespan characteristics by containing carbon nanotubes having a length of 0.1 $\mu$m or more and less than 10 $\mu$m and silicon particles disposed in the inner space of the carbon nanotubes (CNTs), a preparation method thereof, and a lithium secondary battery provided with the anode active material.

In addition, Korean Patent No. 10-1613518, publication date of March 4, 2016 (hereinafter referred to as Conventional Art 2) has conventionally been disclosed.

Conventional Art 2 was related to a method for preparing a carbon-silicon composite electrode material containing silicon nanoparticles and a porous carbon structure having an inverse opal structure, a carbon-silicon composite electrode material prepared by the method, and a secondary battery comprising the carbon-silicon composite electrode material.

Accordingly, Conventional Art 2 could prepare a carbon-silicon composite electrode material containing silicon nanoparticles and a porous carbon structure having an inverse opal structure by a simple method through dry and wet mixing. In addition, Conventional Art 2 was a technology in which a secondary battery manufactured using a carbon-silicon composite electrode material containing silicon nanoparticles and a porous carbon structure having an inverse opal structure has excellent charge and discharge capacity and lifespan characteristics, and it was possible to control the composition of a carbon-silicon composite electrode material containing silicon nanoparticles and a porous carbon structure having an inverse opal structure.

In addition, Korean Patent Publication No. 10-2015-0113314, publication date of October 8, 2015 (hereinafter referred to as Conventional Art 3) has conventionally been disclosed.

Such Conventional Art 3 relates to an anode material, a non-aqueous lithium secondary battery having the same, and a manufacturing method thereof, and was intended to provide an anode material having a simple preparation process, high initial efficiency, and excellent electrochemical properties. In addition, Conventional Art 3 may form a mixture by dry mixing a spherical carbon-based material, silicon nanoparticles, and an amorphous carbon raw material, and may adsorb the silicon nanoparticles and the amorphous carbon raw material on the surface of the carbon-based material by putting the mixture into a solvent and then stirring and drying it. In addition, it was a technology capable of obtaining an anode material by heat-treating a carbon-based material to which the silicon nanoparticles and the amorphous carbon raw material are adsorbed to form a coating layer containing silicon nanoparticles and amorphous carbon on the surface of the carbon-based material.

Meanwhile, Korean Patent Publication No. 10-2022-0052251, publication date of April 27, 2022 (hereinafter referred to as Conventional Art 4) has conventionally been disclosed.

Such Conventional Art 4 relates to a method for manufacturing a metal-carbon composite using coffee grounds as a carbon source and a reducing agent, and more particularly, was a technology providing a method for manufacturing a metal-carbon composite, the method including the steps of: preparing a metal oxide-coffee ground composite by mixing a metal oxide and dried coffee grounds; and carbonizing and reducing the prepared metal oxide-coffee ground composite by performing heat treatment.

Accordingly, in Conventional Art 4, the metal-carbon composite manufacturing method was a technology which is eco-friendly by recycling coffee grounds discarded, and is economical since the manufacturing time can be shortened by simultaneously performing the carbonization process of the coffee grounds and the reduction process of the metal oxide through a single process.

In addition, Korean Patent No. 10-1334594, publication date of June 18, 2012 (hereinafter referred to as Conventional Art 5) has conventionally been disclosed.

Such Conventional Art 5 was a technology providing an anode material, as a secondary battery anode material capable of intercalating and deintercalating ions, and a secondary battery comprising the anode material, wherein the anode material is comprised of a core containing a crystalline carbon-based material, and a composite coating layer containing one or more materials selected from the group consisting of low-crystalline carbon and amorphous carbon and a hydrophilic material, and wherein the composite coating has a structure in which a filler composed of the other components is contained in a matrix composed of one or more materials selected from the group consisting of low-crystalline carbon and amorphous carbon, and one component selected from a hydrophilic material.

As such, silicon, a high-performance material, is an anode material having a theoretical capacity (4,200mAh/g) 10 times higher than that of graphite, but it is also a material with many problems during charging and discharging.

Problems in charging and discharging a silicon anode active material may be divided into three major categories. First, due to a volume change of about 400% of the silicon anode active material, cracks may occur in particles outside silicon, resulting in performance degradation. In addition, a peeling phenomenon may occur as a conductive path between silicon and graphite is broken. In addition, when silicon and graphite are synthesized and used, since charging during synthesis causes volume expansion to the extent of destroying the SEI layer, consuming lithium and generating gas.

Such volume expansion may be improved by inserting silicon into the pores of the coffee grounds and carbonizing them, and since there is an improvement effect such as electrical conductivity and capacity increase due to carbonization, the development thereof is required.

## Summary of Invention

The present disclosure was created to solve the above problems, and an object of the present disclosure is to provide a coffee ground composition which can suppress the phenomenon of silicon crushing and peeling due to volume expansion during charging and discharging, and has improved charging and discharging characteristics such as initial efficiency, capacity, and lifespan characteristics, and a secondary battery anode material comprising the same.

However, the technical tasks to be achieved in the present disclosure are not limited to the above-mentioned technical tasks, another technical tasks not mentioned will be able to be clearly understood by those skilled in the art to which the present disclosure belongs from the description below.

A coffee ground composition according to an embodiment of the present disclosure may have a tap density of 0.48 g/cm$^3$ and a particle diameter D50 of 317.14 $\mu$m.

In a secondary battery anode material comprising a coffee ground composition according to an embodiment of another aspect of the present disclosure, the anode material may show two peaks at 2θ between 30 and 40 degrees, may show three peaks at 2θ between 40 and 45 degrees, and may show two peaks at 2θ between 45 and 50 degrees in XRD analysis.

The present disclosure can contribute to the protection of the natural environment through the preparation of a lithium secondary battery high-capacity silicon anode active material prepared using coffee grounds, an environmental pollutant, and can lower a lithium secondary battery anode material preparation cost with the high-capacity silicon anode active material using the coffee grounds.

In addition, the present disclosure can suppress the phenomenon of silicon crushing and peeling due to volume expansion during charging and discharging.

In addition, the present disclosure can improve charging and discharging characteristics such as initial efficiency, capacity, and lifespan characteristics.

**Brief Description of Drawings**

FIG. 1 is a graph showing XRD measurement results of a coffee ground composition according to an embodiment of the present disclosure.

FIG. 2 is a graph showing XRD measurement results of a secondary battery anode material comprising a coffee ground composition according to an embodiment of the present disclosure.

FIG. 3 is a graph showing Raman spectroscopic measurement results of a coffee ground composition according to an embodiment of the present disclosure.

FIG. 4 is a graph showing Raman spectroscopic measurement results of the secondary battery anode material comprising a coffee ground composition according to an embodiment of the present disclosure.

FIG. 5 is a graph showing X-ray photoelectron spectroscopy (XPS) measurement results of a coffee ground composition according to an embodiment of the present disclosure.

FIG. 6 is a graph showing of X-ray photoelectron spectroscopy (XPS) measurement results of the secondary battery anode material comprising a coffee ground composition according to an embodiment of the present disclosure.

FIG. 7 shows the tap density and particle size analysis results of a coffee ground composition according to an embodiment of the present disclosure.

FIG. 8 shows the tap density and particle size analysis results of a secondary battery anode material comprising a coffee ground composition according to an embodiment of the present disclosure.

FIG. 9 is an SEM image showing coffee grounds collected from a coffee shop.

FIG. 10 is an SEM image showing the insertion of nano-silicon into macropores and micropores of coffee grounds.

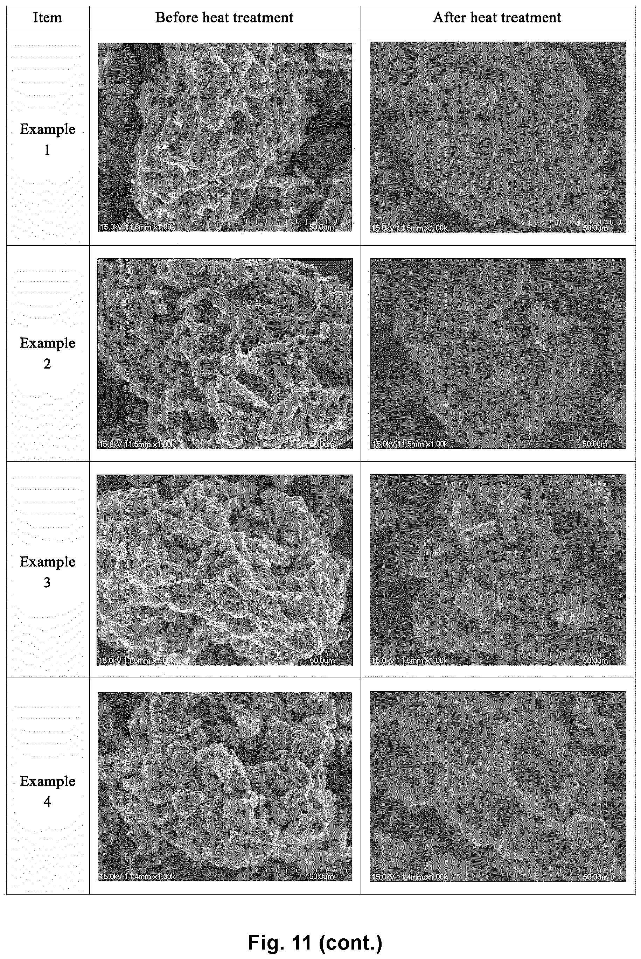

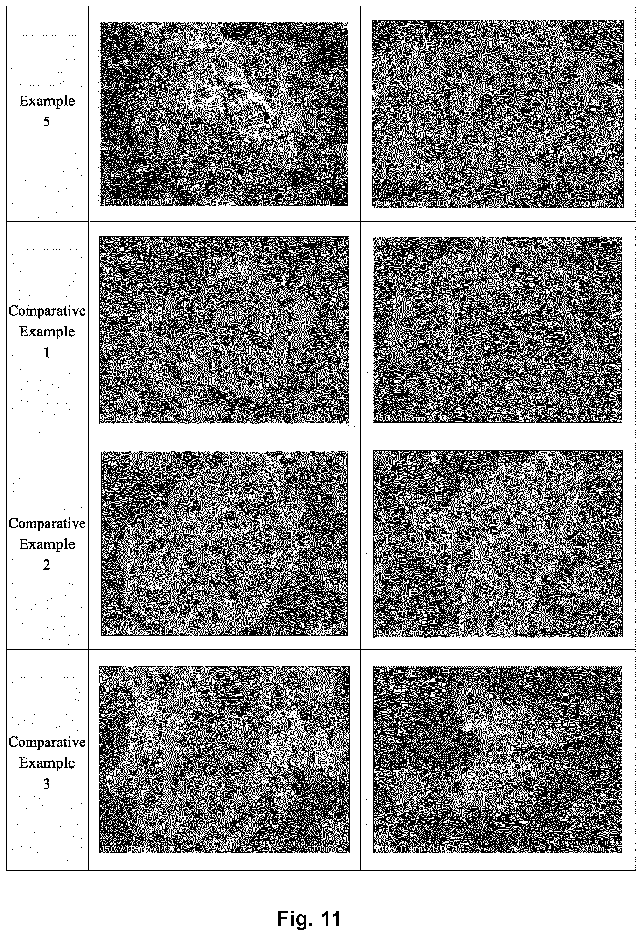

FIG. 11 is SEM images before and after heat treatment of a silicon anode active material in which a nano-silicon mixture is inserted into pores of coffee grounds.

FIGS. 12 and 13 are graphs showing charge and discharge characteristics of a battery for testing silicon active materials.

FIGS. 14 and 15 are tables of experimental data for tap densities for Examples 0 and 1 and Examples 1-1 to 1-8. In FIG. 14, sample No. 1 is for Example 0, and sample No. 6 is for Example 1.

FIGS. 16 and 17 are flowcharts of a method for preparing a silicon anode active material according to an embodiment of the present disclosure.

**Detailed description of the invention**

Hereinafter, embodiments of the present disclosure will be described in detail so that those skilled in the art to which the present disclosure pertains can easily carry out the present disclosure with reference to the accompanying drawings. However, since the description of the present disclosure is only an embodiment for structural or functional description, the scope of rights of the present disclosure should not be construed as being limited by the embodiments described in the text. That is, since the embodiment can be changed in various ways and can have various forms, it should be understood that the scope of rights of the present disclosure includes equivalents capable of realizing the technical idea. In addition, since the object or effect presented in the present disclosure does not mean that a specific embodiment should include all of them or only such an effect, the scope of rights of the present disclosure should not be construed as being limited thereby.

The meaning of terms described in the present disclosure should be understood as follows.

Terms such as "first" and "second" refer to one for distinguishing one element from another element, and the scope of rights should not be limited by these terms. For example, a first element may be termed a second element, and similarly, a second element may be termed a first element. When an element is referred to as "connected" to another element, it should be understood that the element may be directly connected to the other element, but another element may exist in the middle thereof. On the other hand, when an element is referred to as being "directly connected" to another element, it should be understood that another element does not exist in the middle thereof. Meanwhile, other expressions describing the relationship between elements, such as "between" and "directly between" or "neighboring to" and "directly neighboring to" should be interpreted similarly.

A singular expression should be understood to include a plurality of expressions unless the context clearly indicates otherwise, terms such as "comprise", "have", or the like are intended to designate that an installed feature, number, step, operation, component, part, or combination thereof is present, and it should be understood that the possibility of presence or addition of one or more other features, numbers, steps, operations, components, parts, or combinations thereof is not precluded.

All terms used herein, unless otherwise defined, have the same meaning as commonly understood by those skilled in the art to which the present disclosure pertains. Terms defined in commonly used dictionaries should be interpreted as consistent with meanings in the context of the related art, and cannot be interpreted as having ideal or excessively formal meanings unless explicitly defined in the present disclosure.

**Description of coffee ground composition**

The coffee grounds of the present disclosure are a by-product remaining after roasting and pulverizing coffee beans and then performing hydrolysis and heat treatment to extract coffee liquid, and is waste of which 99.8% is discarded. Components such as proteins, fibers, sugars, polyphenol compounds, cellulose, hemicellulose, lignin, etc. remain in the coffee grounds. Tocopherol and polyphenolic and non-polyphenolic compounds that have not been extracted during the coffee hot water extraction process and Maillard reaction polymers that have been produced during the roasting process remain in the coffee grounds, and carbon, nitrogen, and silicon remain during carbonization.

Unless these coffee grounds are recycled, a large amount thereof is treated as industrial waste to cause environmental pollution. In Korea, coffee grounds are supplied as a boiler fuel source for coffee production plants, and some of them are used as animal feed, fertilizer additives, functional material source, biodiesel raw material, culture soil mixture for mushroom cultivation, and activated carbon. In the coffee industry, they are produced in large quantities in the process of making coffee food, and only an extremely small part is recycled in the composting process.

It is most preferable that coffee grounds in the present disclosure are coffee grounds (coffee by-product, coffee waste) collected from a coffee shop, and are preferably contained in a mixing amount of 3 to 19% by weight based on the total weight.

**Anode active material and preparation method thereof**

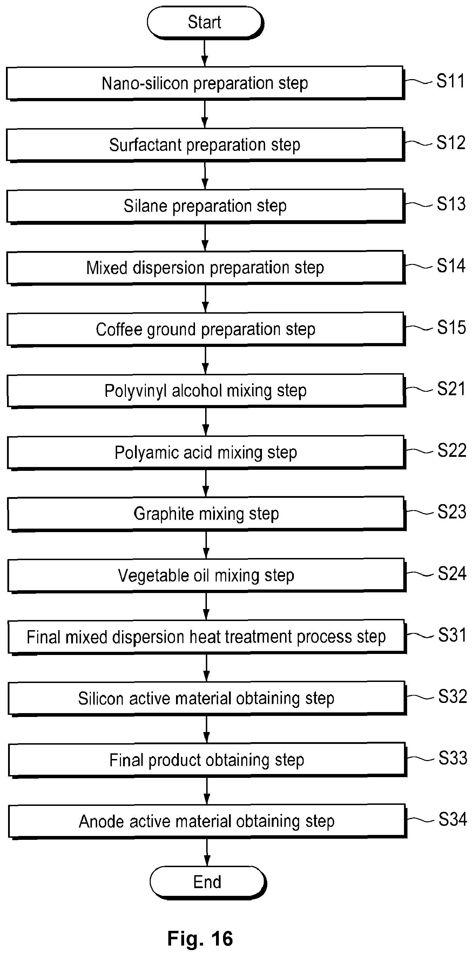

As shown in FIG. 16, a method for preparing a silicon anode active material in which a nano-silicon mixture is inserted into coffee ground pores, according to the present disclosure, may be configured to include a nano-silicon preparation step (S11) of preparing nano-silicon, a surfactant preparation step (S12) of preparing an anion surfactant, a silane preparation step (S13) of preparing silane, a mixed dispersion preparation step (S14) of preparing a mixed dispersion based on ultrapure distilled water, a coffee ground preparation step (S15) of drying coffee grounds to prepare the coffee grounds, a polyvinyl alcohol mixing step (S21) of mixing polyvinyl alcohol with the mixed dispersion, a polyamic acid mixing step (S22) of mixing polyamic acid with the mixed dispersion, a graphite mixing step (S23) of mixing graphite with the mixed dispersion, a vegetable oil mixing step (S24) of mixing vegetable oil with the mixed dispersion, a final mixed dispersion heat treatment process step (S31), a silicon active material obtaining step (S32) of obtaining a silicon active material of a certain size with an ultrasonic vibrating screen, a final product obtaining step (S33) of inserting nano-silicon into the coffee ground pores to obtain a silicon anode active material final product, and an anode active material obtaining step (S34) of obtaining a silicon anode active material in which a nano-silicon mixture ($SiO_2$, SiC) is inserted into the coffee ground pores.

As an example of a means for carrying out such a method for preparing a silicon anode active material, nano-silicon may be composed of one or more selected from the group consisting of silicon (Si), silicon dioxide (Silica, $SiO_2$), and silicon carbide (SiC), the size thereof may be most preferably 20 to 100nm considering the miscibility with other components, and nano-silicon may be preferably contained in mixing amounts of 0.5 to 4% by weight of silicon dioxide (SiO2) and 0.2 to 1.3% by weight of silicon carbide (SiC) based on the total weight.

In addition, the surfactant may be composed of one or more selected from the group consisting of anionic surfactants, cationic surfactants, nonionic surfactants, amphoteric surfactants, and special surfactants, and the surfactant is preferably an anionic surfactant considering the synergistic action with other components, and is preferably contained in mixing amounts of 1 to 9% by weight of a primary anionic surfactant and 7 to 8% by weight of a secondary anionic surfactant based on the total weight.

In addition, silane may be composed of one or more selected from the group consisting of chlorosilane, alkoxysilane, and silazane, and silane is most preferably alkoxysilane (methyltrimethoxysilane: (CH3O)3SiCH3), and is preferably contained in a mixing amount of 6 to 7% by weight based on the total weight.

Furthermore, distilled water may be composed of one or more selected from the group consisting of primary distilled water, secondary distilled water, and tertiary distilled water, it is most preferable to use, as tertiary distilled water, ultrapure distilled water (tertiary distilled water) in which the conductivity value in water is 0.055uS or less and contaminants (particles, ions, microorganisms, organic matter, etc.) are 100% removed, and distilled water is preferably contained in a mixing amount of 35 to 60% by weight based on the total weight.

Meanwhile, the coffee grounds are a by-product remaining after roasting and pulverizing coffee beans and then performing hydrolysis and heat treatment to extract coffee liquid, and is waste of which 99.8% is discarded. Components such as proteins, fibers, sugars, polyphenol compounds, cellulose, hemicellulose, lignin, etc. remain in the coffee grounds. Tocopherol and polyphenolic and non-polyphenolic compounds that have not been extracted during the coffee hot water extraction process and Maillard reaction polymers that have been produced during the roasting process remain in the coffee grounds, and carbon, nitrogen, and silicon remain during carbonization.

Unless these coffee grounds are recycled, a large amount thereof is treated as industrial waste to cause environmental pollution. In Korea, coffee grounds are supplied as a boiler fuel source for coffee production plants, and some of them are used as animal feed, fertilizer additives, functional material source, biodiesel raw material, culture soil mixture for mushroom cultivation, and activated carbon. In the coffee industry, they are produced in large quantities in the process of making coffee food, and only an extremely small part is recycled in the composting process.

It is most preferable that coffee grounds in the present disclosure are coffee grounds (coffee by-product, coffee waste) collected from a coffee shop, and the coffee grounds are preferably contained in a mixing amount of 3 to 19% by weight based on the total weight.

In addition, a water-soluble polymer may be composed of one or more selected from the group consisting of polyvinyl alcohol, starch, rubber, starch derivatives, cellulose derivatives, and nonionic water-soluble polymers, polyvinyl alcohol is preferable considering the synergistic effect with other components, and the water-soluble polymer is preferably contained in a mixing amount of 0.1 to 0.5% by weight based on the total weight.

In addition, polyamic acid is preferably a hydrophilic polymer that can be used for the use of an emulsion stabilizer, a thickener, a film former, and an adhesive, and polyamic acid is preferably contained in a mixing amount of 1 to 1.5% by weight based on the total weight.

Furthermore, an anode active material to be mixed may be composed of one or more selected from the group consisting of natural graphite, artificial graphite, low crystalline carbon-based (soft/hard carbon) one, and a metal-based (silicon) one, natural graphite is preferable considering the synergistic action with other components, and the anode active material is preferably contained in a mixing amount of 10 to 15% by weight based on the total weight.

Finally, oil may be composed of one or more selected from the group consisting of vegetable oil, animal oil, fuel oil, solid oil, industrial oil, and lubricating oil, low-cost vegetable oil is preferable, and oil is preferably contained in a mixing amount of 7 to 8% by weight based on the total weight.

In addition, in order to solve the object of the present disclosure, the uniformly dispersed final mixed dispersion should be subjected to a heat treatment process before layers are generated by specific gravity, and the final mixed dispersion may obtain a silicon anode active material final product by performing heat treatment and carbonization processes in air at 800 to 900°C.

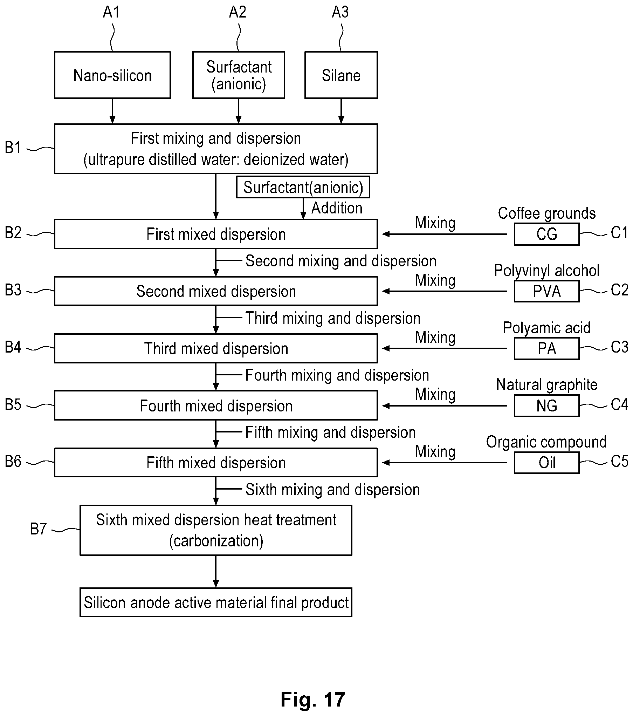

That is, as shown in FIG. 17, the method for preparing a silicon anode active material according to the present disclosure includes preparing two or more kinds of nano-silicon (A1) having a size of 20 to 100 nm, preparing an anionic surfactant (A2) and silane (A3) and then preparing ultrapure distilled water, which is tertiary distilled water as an aqueous solution for preparing a first mixed dispersion, firstly mixing A1, A2, and A3 with ultrapure distilled water as a starting process for preparing a silicon anode active material, and adding the anionic surfactant to the first mixed dispersion in order to mix the first mixed dispersion and coffee grounds (C1), and mixing and dispersing it.

As shown in FIG. 17, B1 to B7 are dispersed using an ultrasonic disperser to prepare a mixed dispersion, and additionally coffee grounds (C1), polyvinyl alcohol (C2), polyamic acid (C3), natural graphite (C4), vegetable oil (C5), etc. are mixed in order.

Here, B7 can obtain a silicon anode active material final product by primarily evaporating moisture from the sixth mixed dispersion at 300 to 380°C and carbonizing it at 800 to 900°C for 1 hour.

In the method for preparing a silicon anode active material of the present disclosure according to FIG. 16, the nano-silicon preparation step (S11) may be more preferably configured by including the steps of drying 20 nm silicon dioxide (CNVision Co., Ltd.: CNSi-01) in a mixing amount of 1 to 0.68% by weight of the total 100% by weight of ultrapure distilled water at 100 to 130°C to prepare it, drying 50 nm silicon carbide (Avention: silicon carbide) in a mixing amount of 1 to 0.26% by weight of the total 100% by weight of ultrapure distilled water at 100 to 130°C to prepare it, and drying silicon to remove moisture contained in silicon.

In the surfactant preparation step (S12), an anionic surfactant that lowers the surface tension by adsorbing an anion generated by dissociation in water on the surface of an aqueous solution is any one component of sodium lauryl ether sulfate, sodium $\alpha$-olefin sulfonate, and alkyldimethylamine oxide, and may be used in a mixing amount of 1 to 7.5% by weight of the total 100% by weight of ultrapure distilled water.

In the silane preparation step (S13), alkoxysilane (methyltrimethoxysilane: $(CH_3O)_3SiCH_3$) used to allow the inorganic surface to have hydrophobic properties may be used in a mixing amount of 1 to 6.25% by weight of the total 100% by weight of ultrapure distilled water.

In the mixed dispersion preparation step (S14), nano-silicon, an anionic surfactant, silane, coffee grounds, polyvinyl alcohol, polyamic acid, natural graphite, and vegetable oil may be mixed and dispersed in ultrapure distilled water (deionized water).

The coffee ground preparation step (S15) is a step of preparing coffee grounds by drying coffee grounds collected from a coffee shop at 130°C, and it is characterized in that there is no water washing process in the entire process from collection to the anode active material final product since the coffee grounds are used in a mixing amount of 10 to 3.66% by weight of the total 100% by weight of ultrapure distilled water, and the coffee grounds used in the above process do not go through the activated carbonization process by performing heat treatment after the processes of immersing the coffee grounds in a hydroxide solution (potassium hydroxide: KOH, sodium hydroxide: NaOH, calcium hydroxide: $Ca(OH)_2$) in order to obtain a plurality of pores and removing the hydroxide solution from the coffee grounds.

In the polyvinyl alcohol mixing step (S21), polyvinyl alcohol described above may be mixed in an amount of 1 to 0.5% by weight of the total 100% by weight of the ultra-pure distilled water mixed solution.

In the polyamic acid mixing step (S22), polyamic acid described above may be mixed in an amount of 1 to 1.37% by weight of the total 100% by weight of the ultrapure distilled water mixed solution.

In the graphite mixing step (S23), natural graphite (T-360: Xiamen TOB New Energy Technology Co., Ltd.) described above may be mixed in an amount of 1 to 15% by weight of the total 100% by weight of the ultra-pure distilled water mixed solution.

In the vegetable oil mixing step (S24), vegetable oil described above may be mixed in an amount of 1 to 7.5% by weight of the total 100% by weight of the ultra-pure distilled water mixed solution.

The final mixed dispersion heat treatment process step (S31) is the sixth mixed dispersion final heat treatment process, and may be configured by including the steps of primarily performing drying at 300 to 380°C and secondly performing heat treatment at 800 to 900°C.

Further in the silicon active material obtaining step (S32), the aforementioned coffee grounds in which nano-silicon and graphite are mixed are pulverized with an automatic grinding mill and screened with an ultrasonic vibrating screen sieve (160#-96 $\mu$m) so that a coffee ground nano-silicon anode active material composite capable of being used as an anode material may be obtained.

## Anode and anode manufacturing method

An anode according to the present disclosure includes the anode active material according to the present disclosure described above.

The anode according to the present disclosure may be manufactured by dissolving or dispersing the aforementioned anode active material according to the present disclosure, a conductive material, and/or a binder, etc. in a solvent to prepare an anode mixture, applying the anode mixture to at least one surface of an anode current collector, and then drying and compressing it, or may be manufactured by casting the anode mixture on a separate support and then laminating a film obtained by peeling it from the support on the anode current collector.

The anode current collector is not particularly limited as long as it has high conductivity while it does not cause chemical change in the battery. For example, copper, stainless steel, aluminum, nickel, titanium, fired carbon, a copper or stainless steel surface which is surface-treated with carbon, nickel, titanium, silver, or the like, an aluminum-cadmium alloy, and the like may be used. In addition, the anode current collector may have a thickness of typically 3 $\mu$m to 500 $\mu$m, and fine irregularities may be formed on the surface of the current collector to strengthen bonding force of the anode active material. For example, it may be used in various forms such as films, sheets, foils, nets, porous bodies, foams, and non-woven fabrics.

The anode active material may be contained in an amount of 80 to 99% by weight, more specifically, 85 to 98% by weight based on the total weight of the anode active material layer. When it is contained in the above amount range, excellent capacity characteristics may be exhibited.

The conductive material is used to impart conductivity to the electrode, and in a battery to be configured, any material that does not cause chemical change and has electronic conductivity can be used without particular limitation. Specific examples thereof may include: graphite such as natural graphite or artificial graphite; carbon-based materials such as carbon black, acetylene black, Ketjenblack, channel black, furnace black, lamp black, thermal black, and carbon fiber; metal powders or metal fibers such as copper, nickel, aluminum, and silver; conductive whiskers such as zinc oxide and potassium titanate; conductive metal oxides such as titanium oxide; conductive polymers such as polyphenylene derivatives; or the like, and they may be used alone or in a mixture of two or more thereof. The conductive material may be contained in an amount of 1% by weight to 30% by weight based on the total weight of the anode active material layer.

In addition, the binder serves to improve the adhesion between the particles of the anode active material and the adhesive strength between the anode active material and the current collector. Specific examples thereof may include polyvinylidene fluoride (PVDF), poly(vinylidene fluoride-co-hexafluoropropylene) (PVDF-co-HFP) copolymer, polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, ethylene-propylene-diene monomer (EPDM), sulfonated EPDM, styrenebutadiene rubber (SBR), fluororubber, various copolymers thereof, or the like, and they may be used alone or in a mixture of two or more thereof. The binder may be contained in an amount of 1% by weight to 30% by weight based on the total weight of the anode active material layer.

Meanwhile, the solvent used in preparing the anode mixture may be a solvent generally used in the art, and for example, dimethyl sulfoxide (DMSO), isopropyl alcohol, N-methylpyrrolidone (NMP), acetone, water, and the like may be used alone or in the form of a mixture thereof. The amount of the solvent used may be appropriately adjusted in consideration of the application thickness of the slurry, preparation yield, viscosity, and the like.

**Lithium secondary battery**

Next, the lithium secondary battery according to the present disclosure will be described.

The anode according to the present disclosure may be usefully used for manufacturing a lithium secondary battery.

Specifically, the lithium secondary battery according to the present disclosure includes an anode, a cathode positioned opposite to the anode, a separator interposed between the anode and the cathode, and an electrolyte, wherein the anode is an anode manufactured by applying the anode active material according to the present disclosure described above.

Meanwhile, the secondary battery may selectively further include a battery container accommodating an electrode assembly of the cathode, the anode, and the separator, and a sealing member sealing the battery container.

The lithium secondary battery may be manufactured according to a conventional secondary battery manufacturing method except for using the anode according to the present disclosure.

Hereinafter, preferred examples and comparative examples of the present disclosure will be described in more detail.

**<Example 0>**

A coffee ground composition was prepared by drying coffee by-products and coffee waste.

**<Example 1>**

0.68% by weight of 20 nm silicon dioxide (CNVision SiO2: CNSi-01) and 0.26% by weight of 50 nm silicon carbide (Avention SiC: silicon carbide) were dried to 130°C and prepared, and then 7.5% by weight of an additional portion-containing anionic surfactant and 6.25% by weight of silane are prepared.

Next, silicon dioxide, silicon carbide, a surfactant, and silane are sequentially put into 57.28% by weight of ultrapure distilled water (deionized water), and then mixing and dispersion are performed for 30 minutes with an ultrasonic disperser (VCX-750) to prepare a first mixed dispersion.

An additional surfactant portion and 3.66% by weight of coffee grounds which are collected from coffee shops and dried at 130°C are put into the first mixed dispersion and dispersed for 30 minutes with an ultrasonic disperser to prepare a second mixed dispersion.

In order to obtain a plurality of pores, the coffee grounds collected from coffee shops rather than the coffee grounds passing through an activated carbonization process by performing heat treatment after the processes of immersing the coffee grounds in a hydroxide solution (potassium hydroxide: KOH, sodium hydroxide: NaOH, calcium hydroxide: Ca(OH)2) and removing the hydroxide solution from the coffee grounds were used as the coffee grounds, and there is no water washing process in the entire process from collecting the coffee grounds used in the above process to the anode active material final product.

After putting 0.5% by weight of polyvinyl alcohol into the second mixed dispersion, it is dispersed for 30 minutes with an ultrasonic disperser to prepare a third mixed dispersion.

After putting 1.37% by weight of polyamic acid into the third mixed dispersion, it is dispersed for 30 minutes with an ultrasonic disperser to prepare a fourth mixed dispersion.

After putting 15% by weight of natural graphite (T-360: Xiamen TOB New Energy Technology Co., Ltd.) into the fourth mixed dispersion, it is dispersed for 30 minutes with an ultrasonic disperser to prepare a fifth mixed dispersion.

After putting 7.5% by weight of vegetable organic compound (Oil: vegetable oil) into the fifth mixed dispersion, it is dispersed for 30 minutes with an ultrasonic disperser to prepare the final sixth mixed dispersion.

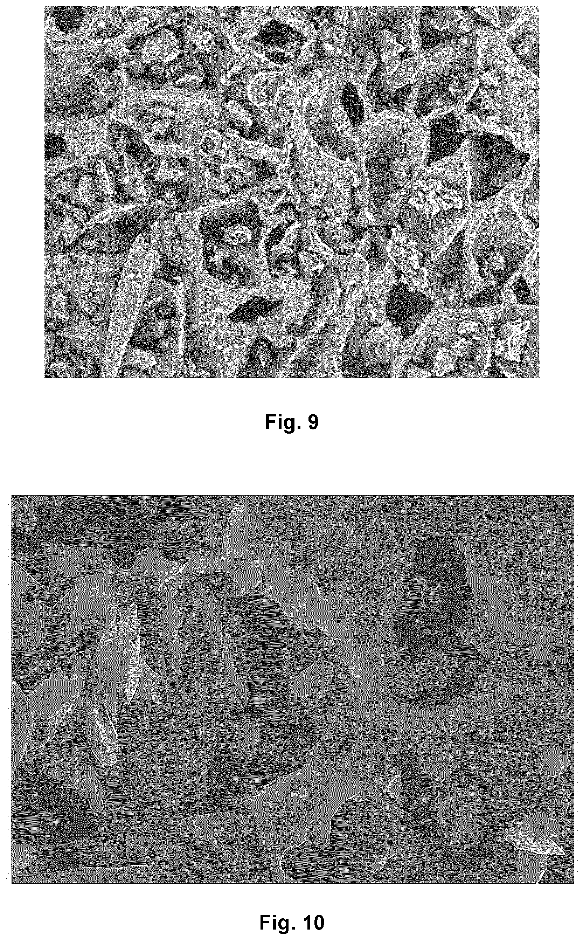

As shown in FIG. 10, an anode active material in which nano-silicon is inserted into the coffee grounds may be obtained by heat-treating the sixth mixed dispersion at 900°C to carbonize the coffee grounds.

The coffee grounds into which nano-silicon is inserted obtained through this process may be used as an anode active material without water washing process.

Coffee grounds in which nano-silicon and graphite are mixed are pulverized with an automatic grinding mill and selected to a size that would pass through an ultrasonic vibrating screen (160#-96 $\mu$m) sieve to prepare a secondary battery anode material.

**<Example 2>**

An anode active material was prepared in the same manner as in Example 1 except that 7.32% by weight of coffee grounds, 1.36% by weight of $SiO_2$, 0.52% by weight of SiC, and 52.68% by weight of ultrapure distilled water were contained in Example 1.

**<Example 3>**

An anode active material was prepared in the same manner as in Example 1 except that 10.98% by weight of coffee grounds, 2.04% by weight of $SiO_2$, 0.78% by weight of SiC, and 48.08% by weight of ultrapure distilled water were contained in Example 1.

**<Example 4>**

An anode active material was prepared in the same manner as in Example 1 except that 14.64% by weight of coffee grounds, 2.72% by weight of $SiO_2$, 1.04% by weight of SiC, and 43.48% by weight of ultrapure distilled water were contained in Example 1.

**<Example 5>**

An anode active material was prepared in the same manner as in Example 1 except that 18.3% by weight of coffee grounds, 3.4% by weight of $SiO_2$, 1.3% by weight of SiC, and 33.88% by weight of ultrapure distilled water were contained in Example 1.

**<Comparative Example 1>**

An anode active material was prepared in the same manner as in Example 1 except that 0% by weight of coffee grounds, 3.4% by weight of $SiO_2$, 1.3% by weight of SiC, and 57.18% by weight of ultrapure distilled water were contained in Example 1.

**<Comparative Example 2>**

An anode active material was prepared in the same manner as in Example 1 except that 18.3% by weight of coffee grounds, 0% by weight of $SiO_2$, 1.3% by weight of SiC, and 42.28% by weight of ultrapure distilled water were contained in Example 1.

**<Comparative Example 3>**

An anode active material was prepared in the same manner as in Example 1 except that 18.3% by weight of coffee grounds, 3.4% by weight of $SiO_2$, 0% by weight of SiC, and 40.18% by weight of ultrapure distilled water were contained in Example 1.

The contents of each material for Examples 1 to 5 and Comparative Examples 1 to 3 are shown in Table 1 below.

[Table 1]

| | Ex. 1 | Ex. 2 | Ex. 3 | Ex. 4 | Ex. 5 | Com. Ex. 1 | Com. Ex. 2 | Com. Ex. 3 |
|---|---|---|---|---|---|---|---|---|
| % by weight of coffee grounds | 3.66 | 7.32 | 10.98 | 14.64 | 18.3 | 0 | 18.3 | 18.3 |
| % by weight of $SiO_2$ | 0.68 | 1.36 | 2.04 | 2.72 | 3.4 | 3.4 | 0 | 3.4 |
| % by weight of SiC | 0.26 | 0.52 | 0.78 | 1.04 | 1.3 | 1.3 | 1.3 | 0 |

In addition, based on Example 1, which is judged to have the most excellent performance, as described below, additional experiments for the following Examples 1-1 to 1-8 were conducted by adjusting the ratios of coffee grounds, SiO2, and SiC to $\pm$ 5, 10, 20, and 30% by weight, respectively.

The experimental method for Examples 1-1 to 1-8 was experimented in the same manner as in Example 1, but only the contents for coffee grounds, SiO2, and SiC were varied as shown in Table 2 below.

[Table 2]

| | Ex. 1-1 | Ex. 1-2 | Ex. 1-3 | Ex. 1-4 | Ex. 1-5 | Ex. 1-6 | Ex. 1-7 | Ex. 1-8 |
|---|---|---|---|---|---|---|---|---|
| % by weight of coffee grounds | 3.477 | 3.843 | 3.294 | 4.026 | 2.928 | 4.392 | 2.562 | 4.758 |
| % by weight of SiO2 | 0.646 | 0.714 | 0.612 | 0.748 | 0.544 | 0.816 | 0.476 | 0.884 |
| % by weight of SiC | 0.247 | 0.273 | 0.234 | 0.286 | 0.208 | 0.312 | 0.182 | 0.338 |

**<Manufacturing Example> Manufacturing of lithium secondary batteries containing silicon anode active materials in which nano-silicon mixtures are inserted into the pores of coffee grounds**

Full cells (65 mm×50 mm 5T) were manufactured with anode active materials obtained by mixing materials according to Examples and Comparative Examples mentioned above, and the data was measured.

An electrode was used as the anode according to the present disclosure, the electrode manufactured by preparing an anode slurry using a silicon anode material in which nano-silicon is inserted into the pores of the coffee grounds, artificial graphite (MCMB: mesocarbon microbeads), acetylene black, carboxymethyl cellulose (CMC), and styrenebutadiene rubber (SBR) at a mixing ratio of 15: 79: 2: 2: 2% by weight, coating the anode slurry to a thickness of 180 $\mu$m on an anode current collector with a Xiamen TOB New Energy Technology Co., Ltd's coating machine (slot die coating machine), and then drying it for 6 hours under vacuum drying conditions of 130°C.

An electrode was used as the cathode, the electrode manufactured by preparing a cathode slurry using NMC811 ($LiNi_{0.8}Mn_{0.1}Co_{0.1}O_2$), acetylene black: and polyvinylidene fluoride (PVDF) at a mixing ratio of 96: 2: 2% by weight, coating the cathode slurry to a thickness of 250 $\mu$m on a cathode current collector with a Xiamen TOB New Energy Technology Co., Ltd's coating machine (slot die coating machine), and then drying it for 6 hours under vacuum drying conditions of 130°C.

The full cells were assembled in an argon-filled glove box.

The electrolyte contains 1M of lithium hexafluorophosphate ($LiPF_6$), and the full cells were fabricated by using an electrolyte solution in which ethylene carbonate (EC): dimethyl carbonate (DMC): diethyl carbonate (DEC) were mixed at a volume ratio of 1:1:1 as the electrolyte and applying a wet separator as the separator.

**<Experimental Example 1>**

The full cells fabricated in Manufacturing Example were charged to 4.2 V and discharged until it became 2.8 V to measure the charge capacities (mAh/g), discharge capacities (mAh/g), and initial charge/discharge efficiencies (%).

In addition, the 50 cycle characteristics of the full cell fabricated for each sample in Manufacturing Example mentioned above were obtained.

The charge and discharge capacities and initial charge/discharge efficiencies mentioned above are shown in Table 3 below.

Table 3

| | Initial charge capacity (mAh/g) | Initial discharge capacity (mAh/g) | Initial charge/discharge efficiency (%) |
|---|---|---|---|
| Ex. 1 | 288.5 | 287.3 | 99.58 |
| Ex. 2 | 278.5 | 276.5 | 99.28 |
| Ex. 3 | 248.3 | 246.2 | 99.15 |
| Ex. 4 | 249.5 | 247.1 | 99.03 |
| Ex. 5 | 243.1 | 241.3 | 99.25 |
| Com. Ex. 1 | 256.7 | 255.2 | 99.41 |
| Com. Ex. 2 | 252.9 | 251.2 | 99.32 |

(continued)

|  | Initial charge capacity (mAh/g) | Initial discharge capacity (mAh/g) | Initial charge/discharge efficiency (%) |
|---|---|---|---|
| Com. Ex. 3 | 231.4 | 230.9 | 99.78 |

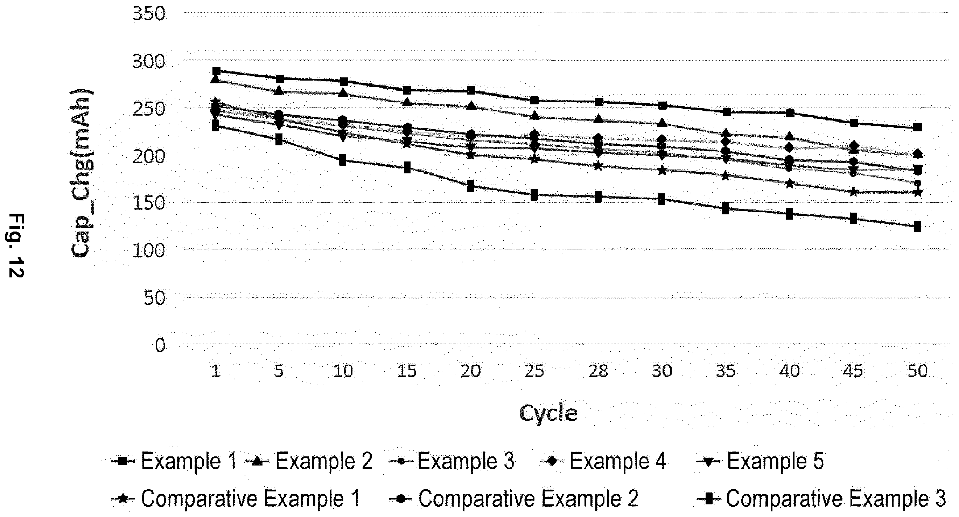

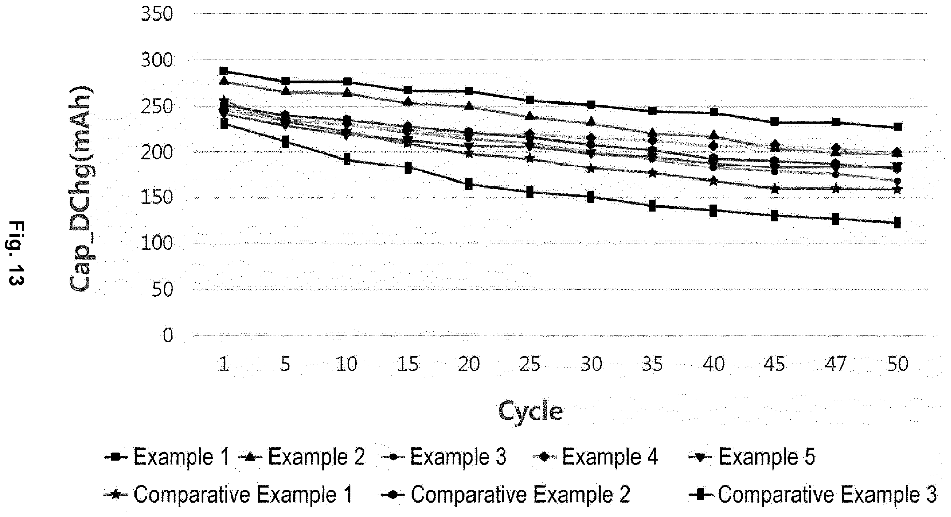

FIGS. 12 and 13 are graphs showing 50 cycle charge/discharge measurement results of batteries having silicon anode active materials for lithium secondary batteries in which nano-silicon is inserted into coffee grounds applied thereto, and, as the measurement results, it can be seen that the mixing amount of Example 1 shows the most excellent charge/discharge cycle characteristics.

There have conventionally been disadvantages in that, when nano-silicon is applied as the anode active materials, volume expansion occurs due to charging and discharging, and accordingly, the capacities are decreased. However, in order to prevent volume expansion, the present disclosure may insert nano-silicon into the pores of the coffee grounds to control expansion of nano-silicon as much as possible, and may prepare the anode active materials using coffee grounds, which are an environmental pollutant, to reduce environmental protection and preparation cost.

In particular, water pollution problems in the preparation process may be prevented without a water washing process in the entire process of the anode active materials.

<Experimental Example 2> XRD analysis results

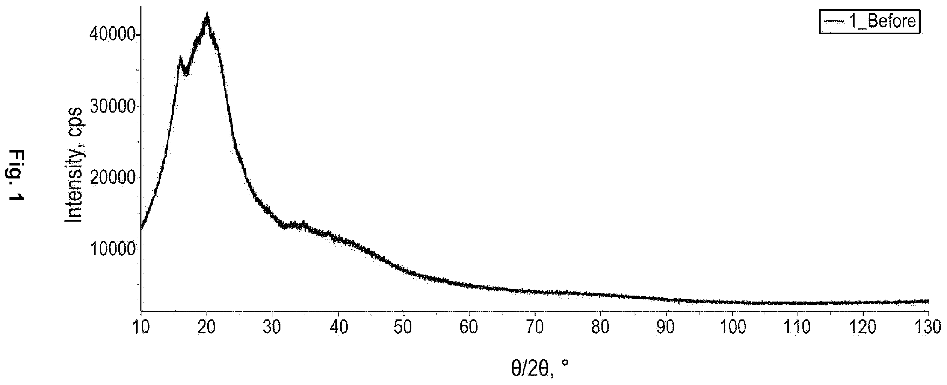

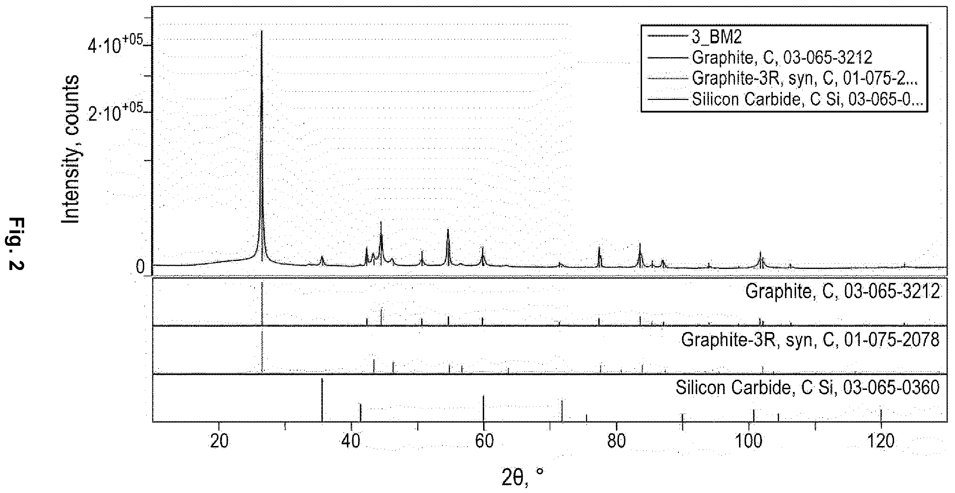

FIG. 1 is a graph showing XRD measurement results of a coffee ground composition according to an embodiment of the present disclosure, and FIG. 2 is a graph showing XRD measurement results of a secondary battery anode material comprising a coffee ground composition according to an embodiment of the present disclosure.

First, XRD measurement was performed on the above-mentioned coffee ground composition of Example 0, and a graph of the result is shown in FIG. 1.

Referring to FIG. 1 and Tables 4 and 5 below, it could be found that the coffee ground composition shows two peaks at $2\theta$ between 30 and 40 degrees, one peak at $2\theta$ between 40 and 45 degrees, and one peak at $2\theta$ between 45 and 50 degrees in XRD analysis.

[Table 4]

| No. | $2\theta$, ° | c.s.d. | d, Å | c.s.d. | Height, counts | c.s.d. | FWHM, ° |
|---|---|---|---|---|---|---|---|
| 1 | 15.95585 | 0.01595 | 5.55002 | 0.00551 | 1568.2 | 18.3 | 3.5101 |
| 2 | 20.24954 | 0.03512 | 4.38186 | 0.00752 | 2739 | 29.9 | 6.410Ei |
| 3 | 34.98507 | 0.11943 | 2.56269 | 0.00847 | 208.4 | 4.1 | 4.0649 |
| 4 | 38.29594 | 0.08758 | 2.3484 | 0.00517 | 155.7 | 3.2 | 2.7371 |
| 5 | 42.71823 | 0.45693 | 2.11497 | 0.02156 | 294.4 | 6.4 | 9.1236 |
| 6 | 47.47143 | 1.23417 | 1.91369 | 0.04687 | 111.2 | 2.8 | 13.3632 |
| 7 | 107.9959 | 0.71807 | 0.95216 | 0.00434 | 25.6 | 1.2 | 24.9301 |
| 8 | 131.4489 | 3.41216 | 0.84501 | 0.01135 | 18.5 | 2.8 | 7.284 |

[Table 5]

| No. | c.s.d. | Int. I., counts° | c.s.d. | Int. W., ° | c.s.d. | Size, Å | c.s.d. |
|---|---|---|---|---|---|---|---|
| 1 | 0.0406 | 8574.86 | 271.82 | 5.468 | 0.237 | 23.8692 | 0.2763 |
| 2 | 0.0275 | 18948.75 | 240.69 | 6.9181 | 0.1634 | 13.1479 | 0.0565 |
| 3 | 1.1622 | 1306.68 | 952.33 | 6.2695 | 4.6914 | 21.402 | 6.1189 |
| 4 | 0.1395 | 858.33 | 337.03 | 5.5126 | 2.2764 | 32.0896 | 1.6355 |
| 5 | 0.8314 | 3385.64 | 945.76 | 11.5008 | 3.4629 | 9.7651 | 0.8899 |

(continued)

| No. | c.s.d. | Int. I., counts° | c.s.d. | Int. W., ° | c.s.d. | Size, Å | c.s.d. |
|---|---|---|---|---|---|---|---|
| 6 | 0.3967 | 1581.59 | 153.16 | 14.2247 | 1.7313 | 6.7828 | 0.2014 |
| 7 | 3.0577 | 1129.3 | 290.56 | 44.0306 | 13.3209 | 5.6621 | 0.6945 |
| 8 | 0.8841 | 148.85 | 22.65 | 8.0345 | 2.4455 | 27.7075 | 3.3628 |

In addition, the coffee ground composition of Example 0 could be found to have diffraction lines with peaks at 2θ = 29.3 ± 0.2°, 95.1 ± 0.2°, 99.4 ± 0.2°, and 121.9 ± 0.2° in XRD analysis.

In addition, XRD measurement was performed on the above-mentioned secondary battery anode material of Example 1, and a graph of the result is shown in FIG. 2.

Referring to FIG. 2 and Tables 6 and 7 below, it could be found that the secondary battery anode material shows two peaks at 2θ between 30 and 40 degrees, three peaks at 2θ between 40 and 45 degrees, and two peaks at 2θ between 45 and 50 degrees in XRD analysis.

[Table 6]

| No. | 2θ, ° | c.s.d. | d, Å | c.s.d. | Height, counts | c.s.d. | FWHM, ° |
|---|---|---|---|---|---|---|---|
| 1 | 13.221 | 0.32579 | 6.69129 | 0.16416 | 28.4 | 0.9 | 3.5855 |
| 2 | 26.49351 | 0.00125 | 3.36161 | 0.00016 | 322107.1 | 477.5 | 0.1654 |
| 3 | 33.57262 | 0.03485 | 2.6672 | 0.00269 | 109.5 | 3.3 | 0.4502 |
| 4 | 35.56649 | 0.00521 | 2.52212 | 0.00036 | 1576.3 | 28.3 | 0.2979 |
| 5 | 42.32318 | 0.00252 | 2.13379 | 0.00012 | 3840.5 | 48.6 | 0.1491 |
| 6 | 43.27883 | 0.00803 | 2.08886 | 0.00037 | 2179.1 | 33.5 | 0.3108 |
| 7 | 44.47235 | 0.00264 | 2.03553 | 0.00011 | 9683.6 | 83.5 | 0.2407 |
| 8 | 46.11116 | 0.0149 | 1.96693 | 0.0006 | 732.9 | 14.4 | 0.4544 |
| 9 | 46.18308 | 0.02022 | 1.96403 | 0.00081 | 220.3 | 4.5 | 0.8248 |
| 10 | 50.61159 | 0.00611 | 1.80208 | 0.0002 | 1032.2 | 20.3 | 0.3608 |
| 11 | 54.58757 | 0.00159 | 1.67984 | 0.00005 | 12630.1 | 98.5 | 0.2152 |
| 12 | 56.41998 | 0.00722 | 1.62955 | 0.00019 | 203 | 5.6 | 0.5163 |
| 13 | 59.80644 | 0.00431 | 1.54512 | 0.0001 | 2169.8 | 35.6 | 0.3793 |
| 14 | 63.32515 | 0.04022 | 1.46747 | 0.00084 | 107.8 | 3.3 | 0.6022 |
| 15 | 71.65694 | 0.01893 | 1.31593 | 0.0003 | 398.6 | 11.3 | 0.6502 |
| 16 | 75.30553 | 0.0225 | 1.26097 | 0.00032 | 37 | 1.4 | 0.1984 |
| 17 | 77.4107 | 0.00133 | 1.23185 | 0.00002 | 5531.7 | 68.8 | 0.1577 |
| 18 | 80.35829 | 0.05577 | 1.19393 | 0.00069 | 52.6 | 1.9 | 0.3702 |
| 19 | 83.50945 | 0.00182 | 1.1567 | 0.00002 | 4090.9 | 56.7 | 0.2845 |
| 20 | 85.28637 | 0.01264 | 1.13709 | 0.00014 | 361.8 | 10.8 | 0.4127 |
| 21 | 86.95462 | 0.00374 | 1.11951 | 0.00004 | 1321.4 | 28.5 | 0.2333 |
| 22 | 92.46747 | 0.03084 | 1.06664 | 0.00027 | 60.9 | 2.4 | 0.1074 |
| 23 | 93.16921 | 0.01633 | 1.06044 | 0.00014 | 57.6 | 2.3 | 0.1804 |
| 24 | 93.96362 | 0.01042 | 1.05356 | 0.00009 | 314.5 | 10.7 | 0.2229 |
| 25 | 98.51483 | 0.02228 | 1.01669 | 0.00017 | 57.3 | 2.2 | 0.4261 |
| 26 | 101.7293 | 0.00392 | 0.99309 | 0.00003 | 1789.2 | 34.2 | 0.481 |
| 27 | 104.3288 | 0.05486 | 0.97534 | 0.00036 | 71.1 | 2.8 | 1.0146 |

(continued)

| No. | 2θ, ° | c.s.d. | d, Å | c.s.d. | Height, counts | c.s.d. | FWHM, ° |
|---|---|---|---|---|---|---|---|
| 28 | 105.8754 | 0.01728 | 0.96531 | 0.00011 | 40.7 | 1.6 | 0.177 |
| 29 | 106.2077 | 0.02543 | 0.9632 | 0.00016 | 123.8 | 4.7 | 0.5854 |
| 30 | 107.3394 | 0.01134 | 0.95616 | 0.00007 | 38.3 | 1.6 | 0.093 |
| 31 | 115.5072 | 0.0168 | 0.91077 | 0.00008 | 33.2 | 1.4 | 0.1249 |
| 32 | 119.8739 | 0.03901 | 0.89003 | 0.00018 | 66.7 | 2.5 | 0.5546 |
| 33 | 123.392 | 0.02721 | 0.8749 | 0.00011 | 149.6 | 5.5 | 0.5173 |

[Table 7]

| No. | c.s.d. | Int. I., counts° | c.s.d. | Int. W., ° | c.s.d. | Size, Å | c. s.d. |
|---|---|---|---|---|---|---|---|
| 1 | 0.8562 | 108.89 | 32.29 | 3.8275 | 1.2566 | 23.2962 | 5.5632 |
| 2 | 0.0014 | 70617.48 | 208.51 | 0.2192 | 0.001 | 515.5118 | 4.4224 |
| 3 | 0.0504 | 85.33 | 5.54 | 0.7794 | 0.0741 | 192.4922 | 21.5691 |
| 4 | 0.0048 | 733.63 | 3.91 | 0.4654 | 0.0108 | 292.5367 | 4.7143 |
| 5 | 0.0029 | 715.53 | 8.22 | 0.1863 | 0.0045 | 596.6186 | 11.6087 |
| 6 | 0.0159 | 1271.77 | 13.59 | 0.5836 | 0.0152 | 287.2282 | 14.6568 |
| 7 | 0.0045 | 3943.24 | 13.31 | 0.4072 | 0.0049 | 372.3448 | 6.9713 |
| 8 | 0.0218 | 574.14 | 13.15 | 0.7834 | 0.0334 | 198.4381 | 9.5307 |
| 9 | 0.0598 | 307.31 | 14.53 | 1.3951 | 0.0946 | 109.3591 | 7.9246 |
| 10 | 0.0107 | 638.4 | 4.09 | 0.6185 | 0.0161 | 254.3599 | 7.543 |
| 11 | 0.0019 | 3798.28 | 12.33 | 0.3007 | 0.0033 | 433.8263 | 3.8857 |
| 12 | 0.0214 | 116.14 | 5.32 | 0.5722 | 0.0421 | 182.3735 | 7.5444 |
| 13 | 0.0058 | 1345.18 | 4.56 | 0.62 | 0.0123 | 252.3492 | 3.8737 |
| 14 | 0.0317 | 71.16 | 4.4 | 0.6599 | 0.0611 | 161.8685 | 8.5308 |
| 15 | 0.0169 | 381.8 | 4.33 | 0.9579 | 0.0379 | 157.3852 | 4.0977 |
| 16 | 0.0464 | 7.83 | 2.1 | 0.2118 | 0.0648 | 528.3041 | 123.6163 |
| 17 | 0.0011 | 1078.93 | 5.16 | 0.195 | 0.0034 | 674.1869 | 4.8336 |
| 18 | 0.1057 | 36.66 | 2.74 | 0.6974 | 0.0778 | 293.3273 | 83.7581 |
| 19 | 0.0024 | 1817.75 | 4.86 | 0.4443 | 0.0074 | 390.9421 | 3.2908 |
| 20 | 0.0249 | 264.26 | 4.13 | 0.7304 | 0.0332 | 273.3427 | 16.4806 |
| 21 | 0.004 | 485.66 | 3.43 | 0.3675 | 0.0105 | 490.1019 | 8.4556 |
| 22 | 0.0293 | 7.47 | 2.05 | 0.1226 | 0.0386 | 1117.255 | 304.64 |
| 23 | 0.041 | 16.98 | 2.37 | 0.2947 | 0.0526 | 669.1058 | 151.9562 |
| 24 | 0.0118 | 114.5 | 2.94 | 0.3641 | 0.0218 | 545.6516 | 28.7791 |
| 25 | 0.0507 | 49.96 | 3.42 | 0.8723 | 0.094 | 298.3277 | 35.4984 |
| 26 | 0.0075 | 1555.07 | 6.05 | 0.8692 | 0.02 | 273.2968 | 4.2605 |
| 27 | 0.1541 | 153.48 | 7.36 | 2.1585 | 0.1882 | 133.3184 | 20.2478 |
| 28 | 0.073 | 8.77 | 4.57 | 0.2153 | 0.1206 | 777.7512 | 320.7102 |

(continued)

| No. | c.s.d. | Int. I., counts° | c.s.d. | Int. W., ° | c.s.d. | Size, Å | c. s.d. |
|---|---|---|---|---|---|---|---|
| 29 | 0.0477 | 88.17 | 5.6 | 0.712 | 0.0719 | 236.0729 | 19.228 |
| 30 | 0.0306 | 4.33 | 1.22 | 0.1131 | 0.0366 | 1506.405 | 495.6901 |
| 31 | 0.0601 | 7.01 | 1.78 | 0.2114 | 0.0624 | 1245.017 | 599.1691 |
| 32 | 0.0793 | 65.65 | 3.95 | 0.9841 | 0.0962 | 298.6719 | 42.7145 |
| 33 | 0.0383 | 137.91 | 3.85 | 0.9221 | 0.0598 | 338.3044 | 25.049 |

In addition, the degrees of orientation of secondary battery anode materials may be obtained from the XRD patterns obtained from X-ray diffraction measurement, and specifically, it could be found that the secondary battery anode materials have orientation peak intensity ratios (1110 / 1004) of the XRD patterns of 0.44. That is, when the orientation peak intensity ratios are 0.44, the space in the particles into which the lithium ions are simultaneously entered increases when lithium ions are inserted into the particles so that the output characteristics may be improved, and it may possible to improve life characteristics by reducing the expansion rate of the electrode by suppressing the expansion in one direction due to the variety of expansion directions during charging and low orientation.

In addition, the orientation peak intensity ratios (I110/I004) of Examples 1-1 to 1-8 obtained as additional experimental results by Examples 1-1 to 1-8 are the same as below (see Table 8).

Table 8

|  | Ex. 1-1 | Ex. 1-2 | Ex. 1-3 | Ex. 1-4 | Ex. 1-5 | Ex. 1-6 | Ex. 1-7 | Ex. 1-8 |
|---|---|---|---|---|---|---|---|---|
| (100) | 3083.6 | 2689.6 | 3007.4 | 2653.7 | 2582 | 4224.6 | 3454.5 | 1503.2 |
| (004) | 4033.3 | 3314.2 | 4028.5 | 3502.8 | 3656.1 | 7394.6 | 4265.1 | 2160.9 |
| (I110/ 1004) | 0.7645 35244 | 0.8115 382 | 0.7465 31 | 0.7575 939 | 0.7062 17 | 0.57130 88 | 0.8099 458 | 0.6956 361 |

Meanwhile, the secondary battery anode material comprising a coffee ground composition according to the present disclosure has a degree of divergence (DD) value defined by Equation 1 below of 5.96 or more.

[Equation 1]

Degree of divergence (DD) = $(I_a/I_{total})$ * 100

In Equation 1, $I_a$ may be a total value of peak intensities appearing at $2\theta = 42.4 \pm 0.2°$, $43.4 \pm 0.2°$, $44.6 \pm 0.2°$, and $77.5 \pm 0.2°$ when measuring XRD using CuK$\alpha$ rays, and $I_{total}$ may be a total value of peak intensities appearing at $2\theta = 26.5 \pm 0.2°$, $42.4 \pm 0.2°$, $43.4 \pm 0.2°$, $44.6 \pm 0.2°$, $54.7 \pm 0.2°$, and $77.5 \pm 0.2°$ when measuring XRD using the CuK$\alpha$ rays.

Table 9 below shows the results of calculating the $I_a$ and $I_{total}$ values and degree of divergence (DD) values described above based on XRD data for Example 1 and additionally experimented Examples 1-1 to 1-8.

[Table 9]

| | Ex. 1 | Ex. 1-1 | Ex. 1-2 | Ex. 1-3 | Ex. 1-4 | Ex. 1-5 | Ex. 1-6 | Ex. 1-7 | Ex. 1-8 |
|---|---|---|---|---|---|---|---|---|---|
| $I_a$ | 21234.9 | 10482.4 | 9001.4 | 9935.4 | 9237.3 | 9036.9 | 15253.1 | 12027.6 | 5140.2 |
| $I_{total}$ | 355972.1 | 121218.5 | 101506.1 | 121421.1 | 106768.9 | 104822.6 | 214863.9 | 135820.7 | 66840.6 |
| DD | 5.965327 | 8.647524924 | 8.8678414 | 8.1825976 | 8.6516767 | 8.621137 | 7.0989589 | 8.8554985 | 7.6902362 |

DD: Degree of Divergence

It was confirmed that the DD degree of divergence (DD) values in Examples 1-1 to 1-8 were 5.96 to 8.86.

**<Experimental Example 3> Results of Raman spectroscopic analysis**

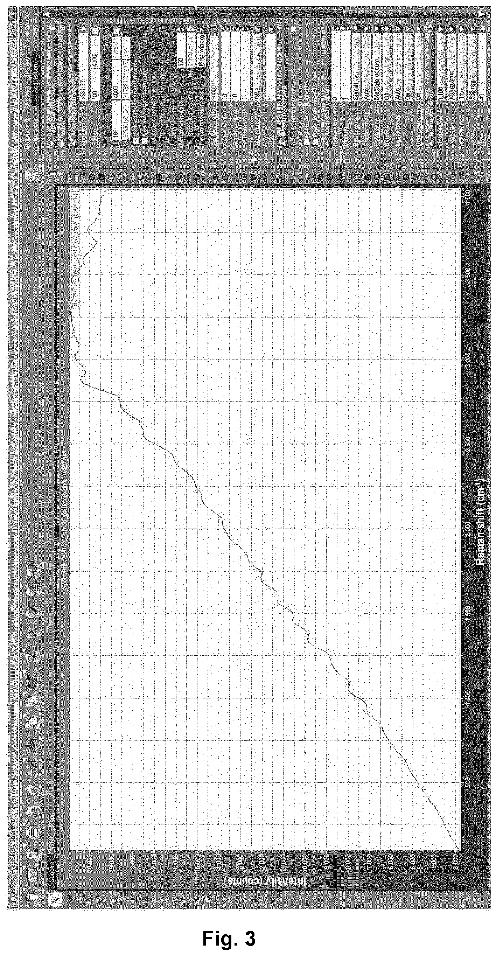

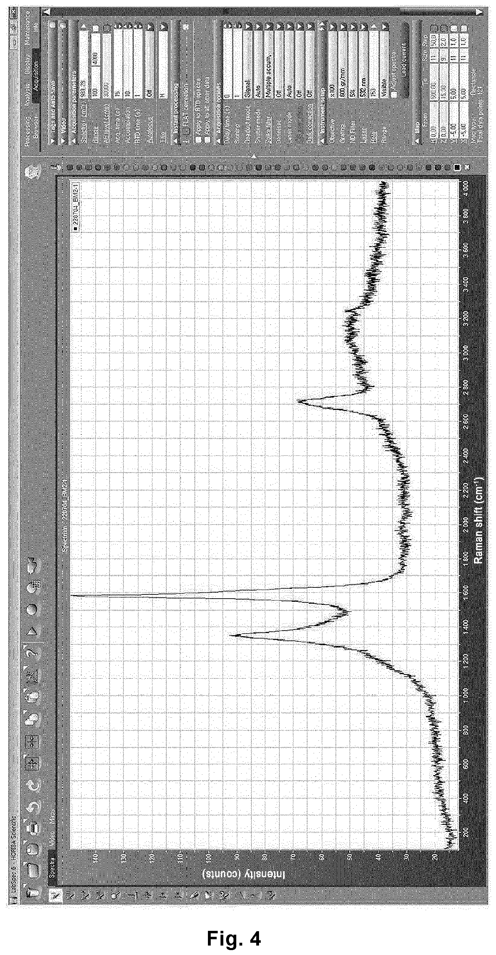

FIG. 3 is a graph showing Raman spectroscopic measurement results of a coffee ground composition according to an embodiment of the present disclosure, and FIG. 4 is a graph showing Raman spectroscopic measurement results of the secondary battery anode material comprising a coffee ground composition according to an embodiment of the present disclosure.

First, Raman spectroscopic measurement was performed on the above-mentioned coffee ground composition of Example 0, and a graph of the result is shown in FIG. 3.

In addition, Raman spectroscopic measurement was performed on the above-mentioned secondary battery anode material of Example 1, and a graph of the result is shown in FIG. 4.

Referring to FIG. 4 and Table 10 below, as a result of Raman spectroscopic measurement, it could be found that the secondary battery anode material shows effective peaks due to ID (D band) and IG (G band) at around 1,350 $cm^{-1}$ and 1,580 $cm^{-1}$, respectively, and the intensity ratios (ID/IG) of the D band and G band are ranged from 0.41 to 0.98. The D band is a peak representing the sp3 bond of the silicon oxycarbide and may represent a carbon crystal having structural defects, and the G band is a peak representing the sp2 bond of the silicon oxycarbide and may represent a carbon crystal having no structural defects.

[Table 10]

| No. | ID (D band) | IG (G band) | ID/IG |
|---|---|---|---|
| 1 | 88.6667 | 146.889 | 0.603631 |
| 2 | 40.4286 | 98.5714 | 0.410145 |
| 3 | 59.2857 | 120.286 | 0.492873 |
| 4 | 698.622 | 711.091 | 0.982465 |

Here, the D band is a peak representing the sp3 bond of the silicon oxycarbide and may represent a carbon crystal having structural defects, and the G band is a peak representing the sp2 bond of the silicon oxycarbide and may represent a carbon crystal having no structural defects.

In addition, in the present disclosure, 'around' means an area adjacent to the extent that it can be seen with the corresponding wave number described in the specification of the present disclosure. For example, in the present disclosure, the meaning of showing an effective peak around 1,350 $cm^{-1}$ not only means the case of showing an effective peak at 1,350 $cm^{-1}$ without a single error, but also means the range of wave numbers to the extent that can be considered to show an effective peak typically at 1,350 $cm^{-1}$ in the art to which the present disclosure pertains. That is, although the wave numbers at which a peak is observed may change under various analysis conditions such as an analyzer, analysis equipment, or analysis sample, it refers to a range of wave numbers to the extent that can be typically commonly used as those observed at the corresponding wave number.

**<Experimental Example 4> XPS analysis results**

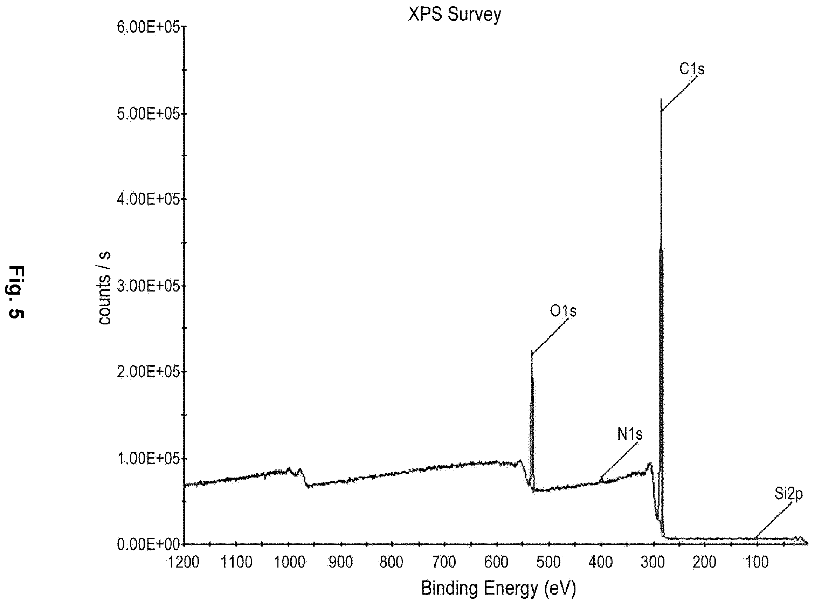

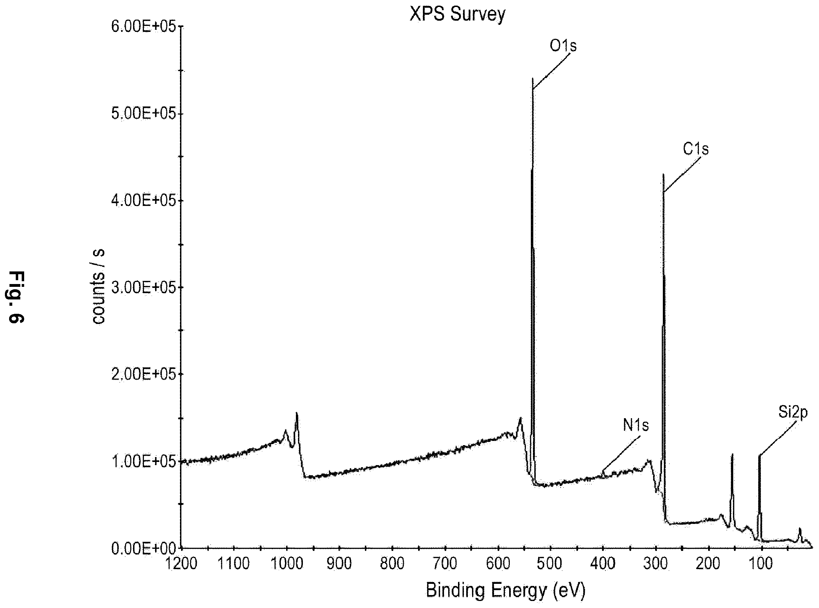

FIG. 5 is a graph showing X-ray photoelectron spectroscopy (XPS) measurement results of a coffee ground composition according to an embodiment of the present disclosure, and FIG. 6 is a graph showing of X-ray photoelectron spectroscopy (XPS) measurement results of the secondary battery anode material comprising a coffee ground composition according to an embodiment of the present disclosure.

First, X-ray photoelectron spectroscopy (XPS) measurement was performed on the above-mentioned coffee ground composition of Example 0, a graph of the resultant is shown in FIG. 5, and the measurement values are shown in Table 11 below.

[Table 11]

| Name | Start BE | Peak BE | End BE | Height CPS | FWHM cV | Area (P) CPS.cV | Atomic % | SF |
|---|---|---|---|---|---|---|---|---|
| C1s | 291.08 | 284.6 | 281.18 | 100496.06 | 1.36 | 177422.59 | 89.16 | 1 |
| N1s | 402.18 | 399.54 | 397.18 | 857.42 | 1.25 | 1261.98 | 0.37 | 1.8 |
| O1s | 536.88 | 532.53 | 528.48 | 18958.97 | 2.61 | 52068.76 | 10.26 | 2.93 |

(continued)

| Name | Start BE | Peak BE | End BE | Height CPS | FWHM cV | Area (P) CPS.cV | Atomic % | SF |
|---|---|---|---|---|---|---|---|---|
| Si2p | 105.08 | 101.88 | 99.88 | 228.64 | 1.43 | 372.19 | 0.21 | 0.817 |

Referring to FIG. 5 and Table 11, as a result of XPS measurement of the coffee ground composition, it could be found that the full width at half maximum (FWHM) of the O1s peak on the measured surface was 2.61, and it could be found that the content of the nitrogen element was 0.37 atomic %.

Here, the full width at half maximum of the O1s peak measured through XPS may represent the sigma bond of oxygen, and in the present application, may represent the amount of water ($H_2O$) that has not reacted with silicon on the surface of the anode material. Therefore, it may mean that silicon on the surface of the anode material reacts less with water as the full width at half maximum increases.

That is, when the full width at half maximum of the XPS O1s peak on the surface of the anode material is 2.0 or more, the reaction between silicon and water on the surface of the anode material may be sufficiently suppressed. Accordingly, it may be possible to suppress a decrease in discharge capacity and capacity efficiency of the secondary battery during the time period from the preparation of the anode material to the formation of the anode.

In addition, it could be found that the coffee ground composition showed a first XPS effective peak, a second XPS effective peak, a third XPS effective peak, and a fourth XPS effective peak in binding energy ranges of 281.18 to 291.08 eV, 397.18 to 402.18 eV, 528.48 to 536.88 eV, and 99.88 to 105.08 eV, respectively.

Here, the 'significant or effective' peak in the present disclosure means a peak that is repeatedly detected in a pattern that can be seen in the art as substantially the same without being significantly affected by analysis conditions or analysis performers in analysis data such as Raman, XRD, or the like, and it is clear that those skilled in the art to which the present disclosure pertains may easily determine whether the corresponding peak is an effective peak or not.

Meanwhile, X-ray photoelectron spectroscopy (XPS) measurement was performed on the above-mentioned secondary battery anode material of Example 1, a graph of the result is shown in FIG. 6, and the measured values are shown in Table 12 below.

[Table 12]

| Name | Start BE | Peak BE | End BE | Height CPS | FWHM cV | Area (P) CPS.cV | Atomic % | SF |
|---|---|---|---|---|---|---|---|---|
| C1s | 292.08 | 284.6 | 281.08 | 68400.67 | 1.42 | 127187.1 | 53.22 | 1 |
| N1s | 403.78 | 400.4 | 395.68 | 615.2 | 3.1 | 2334.29 | 0.58 | 1.8 |
| O1s | 537.58 | 533.36 | 528.48 | 72369.81 | 2.09 | 170354.1 | 27.96 | 2.93 |
| Si2p | 108.48 | 104.02 | 99.08 | 15619.48 | 2.18 | 38729.75 | 18.24 | 0.817 |

Referring to FIG. 6 and Table 12, as a result of XPS measurement of the secondary battery anode material, it could be found that the full width at half maximum (FWHM) of the O1s peak on the measured surface was 2.09, and the anode material had a content of the nitrogen element by X-ray photoelectron spectroscopy (XPS) of 0.58 atomic %.

In addition, it could be found that the secondary battery anode material showed a first XPS effective peak, a second XPS effective peak, a third XPS effective peak, and a fourth XPS effective peak in binding energy ranges of 281.08 to 292.08 eV, 395.68 to 403.78 eV, 528.48 to 537.58 eV, and 99.08 to 108.48 eV, respectively.

Table 13 below relates to XPS experiment data for Examples 1-1 to 1-8 in which additional experiments were conducted.

[Table 13]

| | Name | Start BE | Peak BE | End BE | Height CPS | FWHM eV | Area (P) CPS.eV | Area (N) | Atomic % |
|---|---|---|---|---|---|---|---|---|---|
| Ex. 1-1 | C1s | 297.08 | 285.07 | 277.08 | 771751.4 | 2.63 | 2629914 | 36883.98 | 86.6 |
| | N1s | 405.58 | 402.08 | 394.08 | 7702.16 | 1.19 | 31754.18 | 287.4 | 0.67 |
| | O1s | 541.08 | 533.15 | 524.58 | 178548.1 | 3.3 | 674060 | 3914.23 | 9.19 |
| | Si2p | 110.08 | 104.19 | 93.08 | 26515.31 | 3.34 | 107519.7 | 1503.3 | 3.53 |

(continued)

| | Name | Start BE | Peak BE | End BE | Height CPS | FWHM eV | Area (P) CPS.eV | Area (N) | Atomic % |
|---|---|---|---|---|---|---|---|---|---|
| Ex. 1-2 | C1s | 297.08 | 285.06 | 277.58 | 916627.5 | 2.59 | 3083972 | 43251.71 | 87.23 |
| | N1s | 408 | 401.01 | 394 | 4337.41 | 1.2 | 15581.3 | 140.91 | 0.28 |
| | O1s | 541.08 | 533.35 | 527.08 | 199145.5 | 3.44 | 800152.7 | 4647.2 | 9.37 |
| | Si2p | 110.08 | 104.65 | 93.08 | 29050.09 | 2.24 | 110401.7 | 1544 | 3.11 |
| Ex. 1-3 | C1s | 297.08 | 285.07 | 277.08 | 933107.1 | 2.59 | 3151347 | 44197.01 | 88.21 |
| | N1s | 408 | 399.99 | 394 | 4532.95 | 0.44 | 14129.34 | 127.69 | 0.25 |
| | O1s | 541.58 | 533.34 | 523.58 | 187889 | 3.44 | 747555.5 | 4341.67 | 8.67 |
| | Si2p | 109.58 | 104.35 | 97.08 | 26781.36 | 3.37 | 102811.6 | 1437.61 | 2.87 |
| Ex. 1-4 | C1s | 298.08 | 285.07 | 277.08 | 876461.3 | 2.63 | 2967935 | 41624.63 | 84.27 |
| | N1s | 407.08 | 399.9 | 390.08 | 6682.98 | 4.56 | 44916.62 | 405.9 | 0.82 |
| | O1s | 540.58 | 533.67 | 526.08 | 236629.5 | 3.34 | 928417.9 | 5393.5 | 10.92 |
| | Si2p | 110.08 | 104.39 | 94.08 | 39071.35 | 3.08 | 141098.1 | 1973 | 3.99 |
| Ex. 1-5 | C1s | 298.08 | 285.06 | 277.08 | 697679.7 | 2.62 | 2358345 | 33075.02 | 83.23 |
| | N1s | 405.58 | 400.31 | 393.58 | 8351.34 | 3.91 | 46952.3 | 424.42 | 1.07 |
| | O1s | 540.08 | 533.31 | 527.08 | 202005.1 | 3.17 | 771866.5 | 4482.78 | 11.28 |
| | Si2p | 110.08 | 104.3 | 96.58 | 35155.97 | 3.06 | 125693.3 | 1757.5 | 4.42 |
| Ex. 1-6 | C1s | 297.08 | 285.06 | 277.08 | 652661.2 | 2.64 | 2195924 | 30797.17 | 87.21 |
| | N1s | 408 | 399.47 | 394 | 4647.71 | 1.8 | 29769.01 | 268.93 | 0.76 |
| | O1s | 540.58 | 533.27 | 523.08 | 136377.7 | 3.27 | 527721.1 | 3064.75 | 8.68 |
| | Si2p | 109.58 | 104.33 | 96.58 | 21824.95 | 3.38 | 84729.04 | 1184.75 | 3.35 |
| Ex. 1-7 | C1s | 298.08 | 285.13 | 277.08 | 653899.5 | 2.64 | 2210659 | 31005.33 | 86.88 |
| | N1s | 406.58 | 401.43 | 394.58 | 6770.31 | 4.93 | 37810.46 | 342.05 | 0.96 |
| | O1s | 540.58 | 533.62 | 523.08 | 142773.8 | 1.95 | 545161.7 | 3166.9 | 8.87 |
| | Si2p | 109.08 | 104.29 | 97.08 | 24241.72 | 3.04 | 83798.36 | 1171.7 | 3.28 |
| Ex. 1-8 | C1s | 298.08 | 285.1 | 277.08 | 647837.9 | 2.63 | 2182007 | 30602.9 | 83.97 |
| | N1s | 408 | 399.8 | 394 | 4762.69 | 2.44 | 26997.4 | 243.95 | 0.67 |
| | O1s | 540.58 | 533.26 | 527.08 | 185901.4 | 3.21 | 693776.9 | 4029.09 | 11.06 |
| | Si2p | 110.08 | 104.26 | 97.58 | 31800.3 | 2.96 | 112188.2 | 1568.64 | 4.3 |

It was confirmed that the full width at half maximum (FWHM) values of the 01s peaks of the surface measured through X-ray photoelectron spectroscopy (XPS) in Examples 1-1 to 1-8 were 1.95 to 3.44.

In addition, it was confirmed that the contents of the nitrogen element by X-ray photoelectron spectroscopy (XPS) in Examples 1-1 to 1-8 were 0.25 to 1.07 atomic %.

**<Experimental Example 5> Experimental results of tap density and particle size analysis**

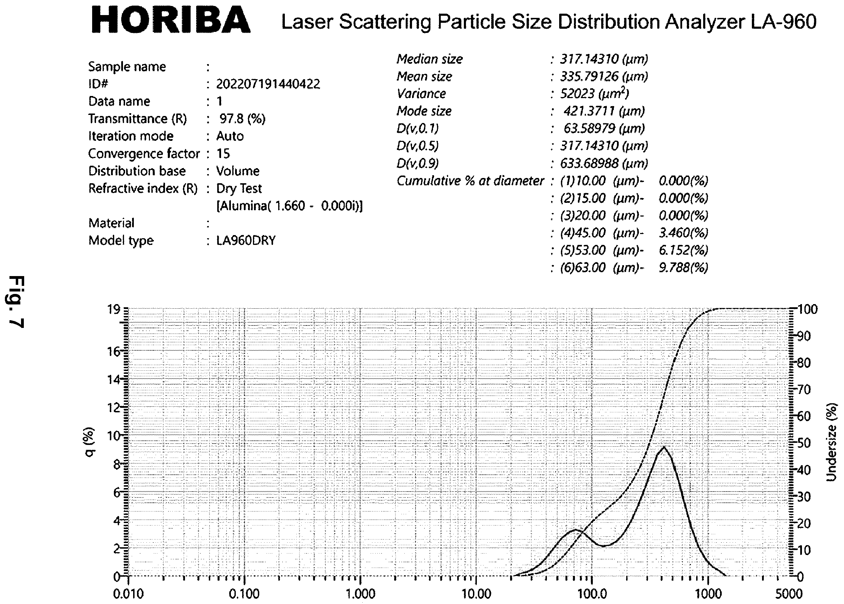

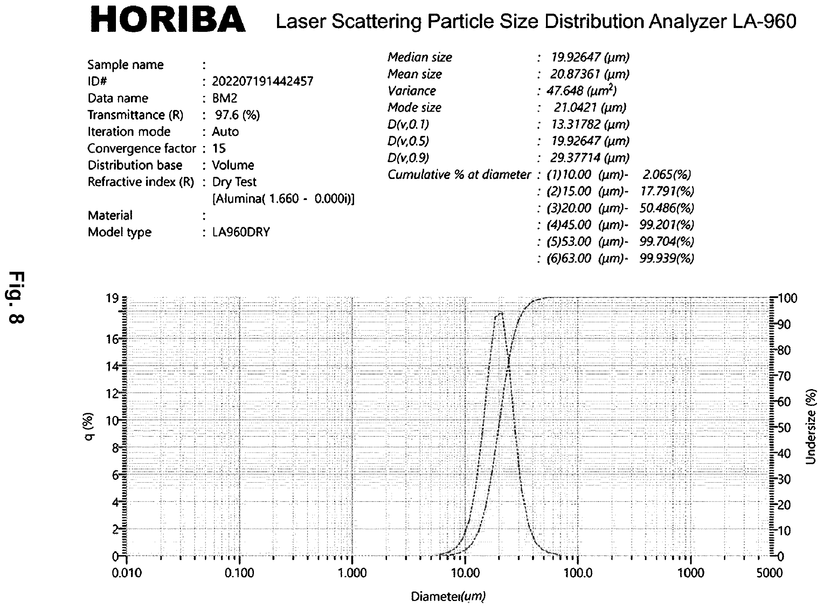

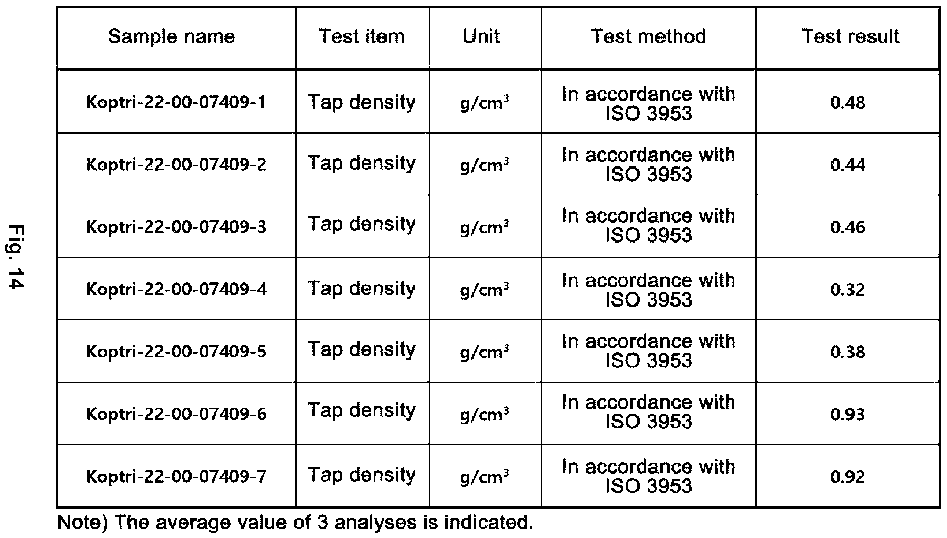

FIGS. 7 and 14 show the tap density and particle size analysis results of a coffee ground composition according to an embodiment of the present disclosure, and FIGS. 8 and 14 show the tap density and particle size analysis results of the secondary battery anode material comprising the coffee ground composition according to an embodiment of the present disclosure.

First, tap density and particle size analyses were performed on the coffee ground composition of Example 0, and the results are shown in FIGS. 7 and 14.

Referring to FIGS. 7 and 14, it could be found that the coffee ground composition had a tap density of 0.48 g/cm$^3$ and a particle diameter D50 of 317.14 $\mu$m.

In addition, tap density and particle size analyses were performed on the secondary battery anode material of Example 1, and the results are shown in FIGS. 8 and 14.

Referring to FIG. 8 and Table 14, it could be found that the secondary battery anode material had a tap density of 0.93 g/cm$^3$ and a particle diameter D50 of 19.93 $\mu$m.

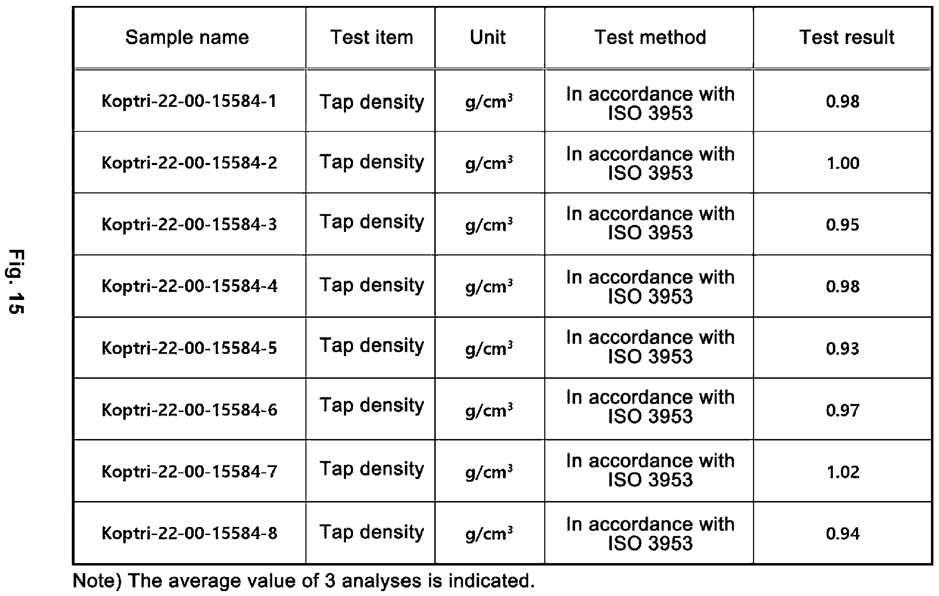

In addition, the tap density measurement results for Examples 1-1 to 1-8 for additional experiments are as shown in FIG. 15. Samples 1 to 8 in FIG. 15 correspond to Examples 1-1 to 1-8, respectively. It was confirmed that the secondary battery anode materials comprising the coffee ground composition had tap densities of 0.93 to 1.02 g/cm$^3$.

In addition, the particle diameter (D(v,0.5) $\mu$m) experimental data for Examples 1-1 to 1-8 for additional experiments are shown in Table 14.

Table 14]

| Example | D(v,0.5) $\mu$m | Example | D(v,0.5) $\mu$m |
|---|---|---|---|
| Example 1-1 | 27.38660 | Example 1-5 | 19.89845 |
| Example 1-2 | 20.90966 | Example 1-6 | 24.81601 |
| Example 1-3 | 18.15269 | Example 1-7 | 29.45513 |
| Example 1-4 | 19.00167 | Example 1-8 | 23.97124 |

It was confirmed that the particle diameters D50 for Examples 1-1 to 1-8 were 18.15 to 29.46 $\mu$m.

As described above, when secondary battery anode materials having the above-described tap densities are pressed at a constant pressure during electrode manufacturing, deformation is minimized so that expansion due to charging and discharging may be suppressed. Accordingly, improved effects such as suppression of expansion of the electrode may be exhibited when the electrode is used as the secondary battery anode materials due to improved tap density and orientation.

As described above, the detailed description of the present disclosure has been made by the embodiments, but since the above-described embodiments have only been described as preferred examples of the present disclosure, it should not be understood that the present disclosure is limited only to the above-described embodiments, and the scope of rights of the present disclosure should be understood as the claims to be described later and equivalent concepts thereof.

**Citation List**

[Patent Documents]

1. Korean Patent No. 10-0903503 (publication date of May 8, 2009)
2. Korean Patent No. 10-1613518,(publication date of March 4, 2016)
3. Korean Patent Publication No. 10-2015-0113314 (publication date of October 8, 2015)
4. Korean Patent Publication No. 10-2022-0052251 (publication date of April 27, 2022)
5. Korean Patent No. 10-1334594 (publication date of June 18, 2012)

**Claims**

1. A coffee ground composition having a tap density of 0.48 g/cm$^3$ and a particle diameter D50 of 317.14 $\mu$m.

2. The coffee ground composition of claim 1, wherein the coffee ground composition shows two peaks at 2θ between 30 and 40 degrees, shows one peak at 2θ between 40 and 45 degrees, and shows one peak at 2θ between 45 and 50 degrees in XRD analysis.

3. The coffee ground composition of claim 1, wherein the coffee ground composition has diffraction lines with peaks at 2θ = 29.3 ± 0.2°, 95.1 ± 0.2°, 99.4 ± 0.2°, and 121.9 ± 0.2° during XRD measurement.

4. The coffee ground composition of claim 1, wherein the coffee ground composition has a full width at half maximum (FWHM) of the O1s peak on the surface measured through X-ray photoelectron spectroscopy (XPS) of 2.61.

5. The coffee ground composition of claim 1, wherein the coffee ground composition has a content of the nitrogen element by X-ray photoelectron spectroscopy (XPS) of 0.37 atomic %.

6. The coffee ground composition of claim 1, wherein the coffee ground composition shows a first XPS effective peak, a second XPS effective peak, a third XPS effective peak, and a fourth XPS effective peak in binding energy ranges of 281.18 to 291.08 eV, 397.18 to 402.18 eV, 528.48 to 536.88 eV, and 99.88 to 105.08 eV, respectively.

7. A secondary battery anode material comprising a coffee ground composition into which nano-silicon is inserted, wherein the secondary battery anode material comprising a coffee ground composition shows two peaks at $2\theta$ between 30 and 40 degrees, shows three peaks at $2\theta$ between 40 and 45 degrees, and shows two peaks at $2\theta$ between 45 and 50 degrees in XRD analysis.

8. The secondary battery anode material of claim 7, wherein the secondary battery anode material comprising the coffee ground composition has an orientation peak intensity ratio (1110 / 1004) of the XRD pattern of 0.44 to 0.81.

9. The secondary battery anode material of claim 7, wherein the secondary battery anode material comprising the coffee ground composition has a degree of divergence (DD) value defined by Equation 1 below of 5.96 to 8.86,

[Equation 1]

$$\text{Degree of divergence (DD)} = (I_a/I_{total}) * 100$$

In Equation 1, $I_a$ is a total value of peak intensities appearing at $2\theta = 42.4 \pm 0.2°$, $43.4 \pm 0.2°$, $44.6 \pm 0.2°$, and $77.5 \pm 0.2°$ when measuring XRD using CuK$\alpha$ rays, and $I_{total}$ is a total value of peak intensities appearing at $2\theta = 26.5 \pm 0.2°$, $42.4 \pm 0.2°$, $43.4 \pm 0.2°$, $44.6 \pm 0.2°$, $54.7 \pm 0.2°$, and $77.5 \pm 0.2°$ when measuring XRD using the CuK$\alpha$ rays.

10. The secondary battery anode material of claim 7, wherein as a result of Raman spectroscopic measurement, the secondary battery anode material comprising the coffee ground composition shows effective peaks due to D band and G band at around 1,350 cm$^{-1}$ and 1,580 cm$^{-1}$, respectively, and the intensity ratios (ID/IG) of the D band and G band are ranged from 0.41 to 0.98.

11. The secondary battery anode material of claim 7, wherein the secondary battery anode material comprising the coffee ground composition has a full width at half maximum (FWHM) value of the 01s peaks of the surface measured through X-ray photoelectron spectroscopy (XPS) of 1.95 to 3.44.

12. The secondary battery anode material of claim 7, wherein the secondary battery anode material comprising the coffee ground composition has a content of the nitrogen element by X-ray photoelectron spectroscopy (XPS) of 0.25 to 1.07 atomic %.

13. The secondary battery anode material of claim 7, wherein the secondary battery anode material comprising the coffee ground composition shows a first XPS effective peak, a second XPS effective peak, a third XPS effective peak, and a fourth XPS effective peak in binding energy ranges of 281.08 to 292.08 eV, 395.68 to 403.78 eV, 528.48 to 537.58 eV, and 99.08 to 108.48 eV, respectively.

14. The secondary battery anode material of claim 7, wherein the secondary battery anode material comprising the coffee ground composition has an initial charge capacity of 243.1 to 288.5 mAh/g and an initial discharge capacity of 241.3 to 287.3 mAh/g.

15. The secondary battery anode material of claim 7, wherein the secondary battery anode material comprising the coffee ground composition has a tap density of 0.93 to 1.02 g/cm$^3$.

16. The secondary battery anode material of claim 7, wherein the secondary battery anode material comprising the coffee ground composition has a particle diameters D50 of 18.15 to 29.46 $\mu$m.

Fig. 1

**Fig. 2**

**Fig. 3**

Fig. 4

**Fig. 5**

**Fig. 6**

EP 4 404 289 A1

**HORIBA** Laser Scattering Particle Size Distribution Analyzer LA-960

| | | |
|---|---|---|
| Sample name | : | |
| ID# | : 202207191440422 | |
| Data name | : 1 | |
| Transmittance (R) | : 97.8 (%) | |
| Iteration mode | : Auto | |
| Convergence factor | : 15 | |
| Distribution base | : Volume | |
| Refractive index (R) | : Dry Test | |
| | [Alumina( 1.660 - 0.000i)] | |
| Material | : | |
| Model type | : LA960DRY | |

Median size : 317.14310 (μm)
Mean size : 335.79126 (μm)
Variance : 52023 (μm²)
Mode size : 421.3711 (μm)
D(v,0.1) : 63.58979 (μm)
D(v,0.5) : 317.14310 (μm)
D(v,0.9) : 633.68988 (μm)
Cumulative % at diameter : (1)10.00 (μm)- 0.000(%)
: (2)15.00 (μm)- 0.000(%)
: (3)20.00 (μm)- 0.000(%)
: (4)45.00 (μm)- 3.460(%)
: (5)53.00 (μm)- 6.152(%)
: (6)63.00 (μm)- 9.788(%)

**Fig. 7**

**HORIBA** Laser Scattering Particle Size Distribution Analyzer LA-960

| | |
|---|---|
| Sample name | : |
| ID# | : 2022071914442457 |
| Data name | : BM2 |
| Transmittance (R) | : 97.6 (%) |
| Iteration mode | : Auto |
| Convergence factor | : 15 |
| Distribution base | : Volume |
| Refractive index (R) | : Dry Test |
| | [Alumina( 1.660 - 0.000i)] |
| Material | : |
| Model type | : LA960DRY |

| | |
|---|---|
| Median size | : 19.92647 (μm) |
| Mean size | : 20.87361 (μm) |
| Variance | : 47.648 (μm²) |
| Mode size | : 21.0421 (μm) |
| D(v,0.1) | : 13.31782 (μm) |
| D(v,0.5) | : 19.92647 (μm) |
| D(v,0.9) | : 29.37714 (μm) |
| Cumulative % at diameter | : (1)10.00 (μm)- 2.065(%) |
| | : (2)15.00 (μm)- 17.791(%) |
| | : (3)20.00 (μm)- 50.486(%) |
| | : (4)45.00 (μm)- 99.201(%) |
| | : (5)53.00 (μm)- 99.704(%) |
| | : (6)63.00 (μm)- 99.939(%) |

**Fig. 8**

Fig. 9

Fig. 10

| Item | Before heat treatment | After heat treatment |
|------|----------------------|----------------------|
| Example 1 | | |
| Example 2 | | |
| Example 3 | | |
| Example 4 | | |

Fig. 11 (cont.)

Fig. 11

Fig. 12

Fig. 13

| Sample name | Test item | Unit | Test method | Test result |
|---|---|---|---|---|
| Koptri-22-00-07409-1 | Tap density | g/cm³ | In accordance with ISO 3953 | 0.48 |
| Koptri-22-00-07409-2 | Tap density | g/cm³ | In accordance with ISO 3953 | 0.44 |
| Koptri-22-00-07409-3 | Tap density | g/cm³ | In accordance with ISO 3953 | 0.46 |
| Koptri-22-00-07409-4 | Tap density | g/cm³ | In accordance with ISO 3953 | 0.32 |
| Koptri-22-00-07409-5 | Tap density | g/cm³ | In accordance with ISO 3953 | 0.38 |
| Koptri-22-00-07409-6 | Tap density | g/cm³ | In accordance with ISO 3953 | 0.93 |
| Koptri-22-00-07409-7 | Tap density | g/cm³ | In accordance with ISO 3953 | 0.92 |

Note) The average value of 3 analyses is indicated.

Fig. 14

Fig. 15

| Sample name | Test item | Unit | Test method | Test result |
|---|---|---|---|---|
| Koptri-22-00-15584-1 | Tap density | g/cm³ | In accordance with ISO 3953 | 0.98 |
| Koptri-22-00-15584-2 | Tap density | g/cm³ | In accordance with ISO 3953 | 1.00 |
| Koptri-22-00-15584-3 | Tap density | g/cm³ | In accordance with ISO 3953 | 0.95 |
| Koptri-22-00-15584-4 | Tap density | g/cm³ | In accordance with ISO 3953 | 0.98 |
| Koptri-22-00-15584-5 | Tap density | g/cm³ | In accordance with ISO 3953 | 0.93 |
| Koptri-22-00-15584-6 | Tap density | g/cm³ | In accordance with ISO 3953 | 0.97 |
| Koptri-22-00-15584-7 | Tap density | g/cm³ | In accordance with ISO 3953 | 1.02 |
| Koptri-22-00-15584-8 | Tap density | g/cm³ | In accordance with ISO 3953 | 0.94 |

Note) The average value of 3 analyses is indicated.

Start

Nano-silicon preparation step — S11

Surfactant preparation step — S12

Silane preparation step — S13

Mixed dispersion preparation step — S14

Coffee ground preparation step — S15

Polyvinyl alcohol mixing step — S21

Polyamic acid mixing step — S22

Graphite mixing step — S23

Vegetable oil mixing step — S24

Final mixed dispersion heat treatment process step — S31

Silicon active material obtaining step — S32

Final product obtaining step — S33

Anode active material obtaining step — S34

End

**Fig. 16**

A1　　　　　　　A2　　　　　　　A3

```
┌──────────────┐  ┌──────────────┐  ┌──────────────┐
│ Nano-silicon │  │  Surfactant  │  │    Silane    │
│              │  │  (anionic)   │  │              │
└──────────────┘  └──────────────┘  └──────────────┘
```

B1 ──
```
┌────────────────────────────────────────────────────┐
│          First mixing and dispersion               │
│  (ultrapure distilled water: deionized water)      │
└────────────────────────────────────────────────────┘
```

Surfactant(anionic)
↓ Addition

B2 ──
```
┌────────────────────────────────────────────────────┐
│              First mixed dispersion                │
└────────────────────────────────────────────────────┘
```
← Mixing ── Coffee grounds [ CG ] ~ C1

── Second mixing and dispersion

B3 ──
```
┌────────────────────────────────────────────────────┐
│              Second mixed dispersion               │
└────────────────────────────────────────────────────┘
```
← Mixing ── Polyvinyl alcohol [ PVA ] ~ C2

── Third mixing and dispersion

B4 ──
```
┌────────────────────────────────────────────────────┐
│              Third mixed dispersion                │
└────────────────────────────────────────────────────┘
```
← Mixing ── Polyamic acid [ PA ] ~ C3

── Fourth mixing and dispersion

B5 ──
```
┌────────────────────────────────────────────────────┐
│              Fourth mixed dispersion               │
└────────────────────────────────────────────────────┘
```
← Mixing ── Natural graphite [ NG ] ~ C4

── Fifth mixing and dispersion

B6 ──
```
┌────────────────────────────────────────────────────┐
│               Fifth mixed dispersion               │
└────────────────────────────────────────────────────┘
```
← Mixing ── Organic compound [ Oil ] ~ C5

── Sixth mixing and dispersion

B7 ──
```
┌────────────────────────────────────────────────────┐
│     Sixth mixed dispersion heat treatment          │
│                (carbonization)                     │
└────────────────────────────────────────────────────┘
```

```
┌────────────────────────────────────────────────────┐
│   Silicon anode active material final product      │
└────────────────────────────────────────────────────┘
```

**Fig. 17**

Europäisches
Patentamt

European
Patent Office

Office européen
des brevets

**EUROPEAN SEARCH REPORT**

Application Number

EP 23 18 8079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 266 441 A1 (MAGNATECH CO LTD [KR]) 25 October 2023 (2023-10-25) * the whole document * | 1-16 | INV. H01M4/04 C01B32/05 C01B32/20 |
| X | LIU SHIH-FU ET AL: "Biowaste-derived Si@SiOx/C anodes for sustainable lithium-ion batteries", ELECTROCHIMICA ACTA, ELSEVIER, AMSTERDAM, NL, vol. 403, 13 November 2021 (2021-11-13), XP086918267, ISSN: 0013-4686, DOI: 10.1016/J.ELECTACTA.2021.139580 [retrieved on 2021-11-13] * the whole document * | 1-16 | H01M4/133 H01M4/134 H01M4/1393 H01M4/1395 H01M4/36 H01M4/38 H01M4/587 H01M4/62 H01M10/052 |
| X | JP 2006 196234 A (HITACHI IND CO LTD) 27 July 2006 (2006-07-27) * paragraph [0008] - paragraph [0010] * * paragraph [0014] * * paragraph [0017] - paragraph [0019] * * paragraph [0023] - paragraph [0024] * * paragraph [0035] * * paragraph [0049] - paragraph [0050] * * paragraph [0020] * | 1-16 | ADD. H01M4/02 |

**TECHNICAL FIELDS SEARCHED (IPC)**

H01M
C01B

The present search report has been drawn up for all claims

| Place of search | Date of completion of the search | Examiner |
|---|---|---|
| The Hague | 30 May 2024 | Maxisch, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 8079

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2024

| Patent document cited in search report | | Publication date | Patent family member(s) | | Publication date |
|---|---|---|---|---|---|
| EP 4266441 | A1 | 25-10-2023 | EP | 4266441 A1 | 25-10-2023 |
| | | | JP | 2023160802 A | 02-11-2023 |
| | | | US | 2023343964 A1 | 26-10-2023 |
| | | | WO | 2023204585 A1 | 26-10-2023 |
| JP 2006196234 | A | 27-07-2006 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230006702
- KR 100903503
- KR 101613518
- KR 1020150113314
- KR 1020220052251
- KR 101334594